# EUROPEAN PATENT APPLICATION

(11) **EP 4 811 128 A1**
(43) Date of publication of application: **23.09.2026**
(21) Application number: 24899768.6
(22) Date of filing: 02.12.2024
(51) Int. Cl.: G06F 9/455

(54) **DATA OPERATION METHOD FOR MODEL, AND RELATED APPARATUS**

(30) Priority: 05.12.2023 CN 202311665038
(71) Applicant: Huawei Technologies Co., Ltd., Shenzhen, Guangdong 518129 (CN)
(72) Inventor: GAO, Xiong, Shenzhen, Guangdong 518129 (CN)
(74) Representative: Maiwald GmbH
(86) International application number: PCT/CN2024/136065
(87) International publication number: WO 2025/119128

(57) **Abstract**

A data operation method for a model and a related apparatus are disclosed, and are applied to running of an artificial intelligence (Artificial Intelligence, AI) model. In the method, based on an input tensor of an operation in the AI model during actual running, a computational graph corresponding to the operation in the AI model is compiled into a bytecode instruction, and then the bytecode instruction is interpreted and run by a virtual machine that is preconfigured with a corresponding processing function, to perform the operation in the AI model. This effectively avoids execution of a conventional complex compilation process and shortens running duration of the AI model.

## Description

This application claims priority to Chinese Patent Application No. 202311665038.6, filed with the China National Intellectual Property Administration on December 5, 2023 and entitled "DATA OPERATION METHOD FOR MODEL AND RELATED APPARATUS", which is incorporated herein by reference in its entirety.

### TECHNICAL FIELD

This application relates to the field of artificial intelligence (Artificial Intelligence, AI) technologies, and in particular, to a data operation method for a model and a related apparatus.

### BACKGROUND

In recent years, AI technologies represented by deep learning have developed rapidly and achieved good results in fields such as computer vision and natural language processing. To improve development efficiency and computing performance of AI models, an AI computing framework is usually used in the industry for expression and computing of the AI models. The AI computing framework usually provides hundreds of operators of different types for users. A plurality of operators are interconnected to form a computational graph, to correspond to a specific AI model. When different operators are executed, one or more tensors (Tensors) are used as an input parameter for computing, then a matching kernel function is invoked for corresponding computing, and finally one or more tensors are used as an output result.

To improve AI computing performance, the AI computing framework in the industry generally uses operator fusion to improve the performance. To be specific, one or more adjacent operator nodes in a computational graph are combined into a new fused operator for overall computing. Because there is a large quantity of combinations of operators that can be fused for different computational graphs, currently, an automatic kernel function compilation technology is generally used to generate a kernel function corresponding to a fused operator. Automatic kernel function compilation means automatically generating, based on computing semantic corresponding to a fused operator and shapes of an input tensor and an output tensor, a machine instruction that can be directly executed by a device.

However, for some AI models (for example, a Transformer model) with uncertain lengths of input data or intermediate data, because a shape of an input tensor corresponding to an operation in the AI models can be known only when the AI models are specifically executed, kernel function compilation cannot be performed in advance for the AI models. Consequently, a kernel function compilation phase needs to be performed each time the AI models are run, resulting in long running duration of the AI models.

### SUMMARY

This application provides a data operation method for a model. Based on an input tensor of an operation in an AI model during actual running, a computational graph corresponding to the operation in the AI model is compiled into a bytecode instruction, and then the bytecode instruction is interpreted and run by a virtual machine that is preconfigured with a corresponding processing function, to perform the operation in the AI model. This effectively avoids execution of a conventional complex compilation process and shortens running duration of the AI model.

A first aspect of this application provides a data operation method for a model, applied to running of an AI model. In the method, a computational graph and a shape of an input tensor are first obtained, where the computational graph indicates an operational operation in the AI model, the input tensor represents input data corresponding to the operational operation, and the shape of the input tensor is a size of the input tensor. In other words, the computational graph actually indicates how to perform an operational operation on a tensor, and the input tensor is input data corresponding to the operational operation indicated by the computational graph. The input tensor is multi-dimensional data, and the shape of the input tensor is not fixed, and may be determined based on an actual running status of the AI model. In addition, the input tensor may include, for example, one or more tensors, which is specifically determined based on a quantity of pieces of input data indicated by the computational graph.

Then, at least one bytecode instruction is generated based on the computational graph and the shape of the input tensor, where the at least one bytecode instruction indicates an operational operation performed on the input tensor. The at least one bytecode instruction indicates, in a binary instruction manner, the operational operation performed on the input tensor. In addition, the at least one bytecode instruction is actually a bytecode, that is, intermediate code, and cannot be directly identified and executed by hardware, but needs to be interpreted and executed by a software module.

Finally, a virtual machine executes the at least one bytecode instruction, where a processing function corresponding to the at least one bytecode instruction is configured in the virtual machine, and the processing function is used to interpret the at least one bytecode instruction and invoke, based on an interpretation result, a machine instruction that can be identified by hardware (that is, a machine instruction corresponding to the at least one bytecode instruction), to perform the operational operation on the input tensor. That the processing function interprets the bytecode instruction means that the processing function analyzes content of the bytecode instruction, and invokes, based on the content of the bytecode instruction, the machine instruction to implement the operational operation on the tensor data. Specifically, a plurality of processing functions are configured in the virtual machine, and different processing functions are used to process different types of bytecode instructions, to ensure that all bytecode instructions that indicate different operational operations are processed by using corresponding processing functions. Specifically, the virtual machine in this solution may also be referred to as a kernel function, is an execution entity of an operator when the operator is running, and can interpret and execute a bytecode instruction, to implement running of the operator. A specific implementation of the virtual machine may be binary instruction code that can be directly executed by device hardware.

In this solution, based on an input tensor of an operation in the AI model during actual running, a computational graph corresponding to the operation in the AI model is compiled into a bytecode instruction, and then the bytecode instruction is interpreted and run by a virtual machine that is preconfigured with a corresponding processing function, to perform the operation in the AI model. This effectively avoids execution of a conventional complex compilation process and shortens running duration of the AI model.

In addition, compared with a model compilation process executed for an AI model in a related conventional technology, in this solution, a simple bytecode instruction is generated only based on a computational graph and an actual input tensor, and a complete compilation process (that is, preprocessing, syntax parsing, instruction generation, assembly, linking, and file outputting) does not need to be performed. In addition, the generated bytecode instruction can be interpreted and executed by a pre-implemented processing function in the virtual machine, to ensure a high generation and execution speed of the bytecode instruction, thereby effectively increasing running efficiency of the AI model.

In a possible implementation, the at least one bytecode instruction further indicates to tile the input tensor into a plurality of portions to perform an operational operation, respectively. In this way, when the at least one bytecode instruction is interpreted and executed by the virtual machine, the at least one bytecode instruction may be processed in parallel by using a plurality of virtual machine instances located in different processor cores, and different virtual machine instances in the plurality of virtual machine instances are used to process different data in the input tensor. To be specific, each of the plurality of virtual machine instances is responsible for processing a part of data in the input tensor, so that the plurality of virtual machine instances process the input tensor in parallel.

In this solution, the bytecode instruction indicates to tile the tensor, so that the tensor can be tiled when the bytecode instruction is interpreted and executed, and the tensor can be allocated to a plurality of processor cores for parallel processing, thereby implementing parallel processing of a tensor operation, and increasing efficiency of AI operating.

In a possible implementation, the at least one bytecode instruction includes a tile quantity, and the tile quantity indicates a quantity of tiles of the input tensor.

In a possible implementation, the tile quantity is greater than or equal to a quantity of the plurality of virtual machine instances. Generally, one virtual machine instance runs on one processor core. Therefore, the tile quantity is actually greater than or equal to a quantity of processor cores used to execute a bytecode instruction.

In this solution, the bytecode instruction indicates the quantity of tiles of the tensor, so that when the bytecode instruction is interpreted and executed, the input tensor can be quickly tiled into a plurality of portions based on tensor tiling and sent to a corresponding processor core for processing, and the virtual machine does not need to additionally determine how to tile the tensor, thereby increasing efficiency of AI operating.

In a possible implementation, the method further includes: generating a first bytecode instruction and a second bytecode instruction based on the computational graph and the input tensor, where the first bytecode instruction indicates to migrate the input tensor from a global memory to a local memory, and the second bytecode instruction indicates to migrate, from the local memory to the global memory, an output tensor obtained by processing the input tensor.

In an execution phase of the bytecode instruction, specifically, the virtual machine sequentially executes the first bytecode instruction, the at least one bytecode instruction, and the second bytecode instruction.

It should be noted that, in this solution, that first bytecode instruction indicating to migrate the input tensor from the global memory to the local memory and the second bytecode instruction indicating to migrate, from the local memory to the global memory, the output tensor obtained by processing the input tensor are generated based on the computational graph is described. In some special cases, for example, when the input tensor is a random tensor, a bytecode instruction for migrating the input tensor from the global memory to the local memory may not need to be generated, but the random tensor is directly generated in the local memory.

In this solution, in a bytecode instruction generation phase, a corresponding data migration instruction is additionally generated for an execution status of the bytecode instruction on hardware, so that a tensor can be migrated between the global memory and the local memory, it is ensured that different processor cores on the hardware can smoothly perform an operation on the tensor, and it is ensured that a plurality of processor cores can perform tensor operations in parallel, thereby improving implementability of the solution.

In a possible implementation, after generating the at least one bytecode instruction, the method further includes: migrating the at least one bytecode instruction to memory space accessed by AI hardware, where the AI hardware is configured to run the virtual machine. For example, the AI hardware is, for example, hardware like a graphics processing unit (graphics processing unit, GPU), a neural network processing unit (Neural Process Unit, NPU), or a tensor processing unit (Tensor Processing Unit, TPU), which is specially used to implement AI computing and can accelerate the AI computing.

In a possible implementation, generating the at least one bytecode instruction based on the computational graph and the shape of the input tensor includes: obtaining a first meta-operator graph through conversion based on the computational graph, where the first meta-operator graph includes a plurality of meta-operators. The computational graph indicates a part or all of operational operations in the AI model, and the plurality of meta-operators all indicate a basic operational operation. To be specific, a meta-operator is a most basic unit for performing an operational operation, and the meta-operator cannot be obtained by combining other more basic operators. Then, the at least one bytecode instruction is generated based on the shape of the input tensor and the first meta-operator graph, where the plurality of meta-operators correspond to the at least one bytecode instruction. In addition, one meta-operator may correspond to one or more bytecode instructions.

In this solution, because the bytecode instruction is processed by using the processing function configured in the virtual machine, and all operators can be obtained by combining meta-operators, generating the bytecode instruction at a granularity of a meta-operator can reduce a type of a generated bytecode instruction as much as possible, thereby reducing a quantity of processing functions preconfigured in the virtual machine, and reducing implementation complexity of the virtual machine.

In a possible implementation, obtaining the first meta-operator graph through conversion based on the computational graph specifically includes: converting each operator in the computational graph into one or more meta-operators, to obtain a converted computational graph. In other words, some operators in the computational graph may be composite operators formed by combining a plurality of meta-operators. Therefore, all the operators in the computational graph may be represented in a meta-operator manner, to obtain the converted computational graph formed by the meta-operators. Then, the converted computational graph is divided into a plurality of consecutive meta-operator graphs, where the plurality of meta-operator graphs include the first meta-operator graph, and each of the plurality of meta-operator graphs includes a plurality of meta-operators. To be specific, for the converted computational graph, the converted computational graph may be divided into a plurality of portions according to an execution sequence of the meta-operators, and each portion includes a plurality of adjacent meta-operators. In this way, the plurality of adjacent meta-operators in each portion are fused to obtain one meta-operator graph, so that the converted computational graph is divided into a plurality of meta-operator graphs, and each meta-operator graph is obtained by fusing a plurality of meta-operators.

In this solution, the converted computational graph is split into a plurality of meta-operator graphs for processing, so that it can be ensured that the virtual machine executes a single meta-operator graph each time, thereby avoiding a case in which memory of a device running the virtual machine is insufficient due to an excessive quantity of meta-operators that are continuously processed. In addition, a plurality of meta-operators are fused into one meta-operator graph, so that intermediate data obtained by processing a plurality of meta-operators in a same meta-operator graph can be stored in a local memory that is of a device and that has a higher read/write speed, and data does not need to be frequently read from/written into a global memory that is of the device and that has a lower read/write speed, thereby increasing operator processing efficiency.

In a possible implementation, the at least one bytecode instruction includes an instruction identifier, and the instruction identifier uniquely identifies a type of the at least one bytecode instruction. The virtual machine is configured to invoke, based on the instruction identifier, the processing function corresponding to the at least one bytecode instruction to process the at least one bytecode instruction. For example, a bytecode instruction indicating that an operational operation to be performed is an addition operation may be represented by an instruction identifier 00, and a bytecode instruction indicating that an operational operation to be performed is a subtraction operation may be represented by an instruction identifier 01. In this solution, an instruction identifier is set in a bytecode instruction, so that a type of the bytecode instruction can be uniquely identified, the virtual machine quickly invokes, based on the instruction identifier, a corresponding processing function to process the bytecode instruction, thereby increasing efficiency of interpreting and executing the bytecode instruction.

In a possible implementation, the at least one bytecode instruction includes a data type identifier, and the data type identifier indicates a data type of the input tensor. For example, the data type identifier is fp32, which represents that the data type of the input tensor is a 32-bit floating-point number. Therefore, an operation performed on the input tensor is actually a 32-bit floating-point computation. For example, in the bytecode instruction, different data type identifiers may indicate different data types, for example, data types such as a 32-bit floating-point number, a 16-bit floating-point number, or a 32-bit integer. The data type is not specifically limited herein.

In a possible implementation, the at least one bytecode instruction further indicates a storage address of the input tensor and a storage address of the output tensor. In addition, both the storage address of the input tensor and the storage address of the output tensor are addresses in the local memory.

It should be noted that, when the input tensor is a random variable, because the input tensor may be actually randomly generated when being used, the storage address of the input tensor may not be indicated in the bytecode instruction, but only the storage address of the output tensor is indicated.

In a possible implementation, obtaining computational graph specifically includes: obtaining an operator invoking instruction, where the operator invoking instruction indicates to perform an operational operation corresponding to a target operator, and the operator invoking instruction includes the input tensor; and generating the computational graph based on the target operator indicated in the operator invoking instruction. The computational graph is generated based on the target operator, and indicates, in an operator node and directed edge manner, to perform an operational operation indicated by the target operator on the input tensor. In addition, the computational graph includes a plurality of meta-operators representing the target operator, and the plurality of meta-operators all indicate a basic operational operation. In other words, the computational graph itself includes a plurality of meta-operators, and does not include a composite operator formed by combining a plurality of meta-operators.

A second aspect of this application provides a data operation apparatus for a model, including: an obtaining module, configured to obtain a computational graph and a shape of an input tensor, where the computational graph indicates an operational operation in an artificial intelligence AI model, and the input tensor represents input data corresponding to the operational operation; and a processing module, configured to generate at least one bytecode instruction based on the computational graph and the shape of the input tensor, where the at least one bytecode instruction indicates an operational operation performed on the input tensor; and the processing module is further configured to execute the at least one bytecode instruction via a virtual machine, where a processing function corresponding to the at least one bytecode instruction is configured in the virtual machine, and the processing function is used to interpret the at least one bytecode instruction and invoke a machine instruction based on an interpretation result to perform the operational operation on the input tensor.

In a possible implementation, the at least one bytecode instruction further indicates to tile the input tensor into a plurality of portions to separately perform an operational operation; and the processing module is specifically configured to process the at least one bytecode instruction in parallel by using a plurality of virtual machine instances located in different processor cores, where different virtual machine instances in the plurality of virtual machine instances are used to process different data in the input tensor.

In a possible implementation, the at least one bytecode instruction includes a tile quantity, and the tile quantity indicates a quantity of tiles of the input tensor.

In a possible implementation, the tile quantity is greater than or equal to a quantity of the plurality of virtual machine instances.

In a possible implementation, the processing module is further configured to: generate a first bytecode instruction and a second bytecode instruction based on the computational graph and the input tensor, where the first bytecode instruction indicates to migrate the input tensor from a global memory to a local memory, and the second bytecode instruction indicates to migrate, from the local memory to the global memory, an output tensor obtained by processing the input tensor; and sequentially execute the first bytecode instruction, the at least one bytecode instruction, and the second bytecode instruction via the virtual machine.

In a possible implementation, after generating the at least one bytecode instruction, the processing module is further configured to migrate the at least one bytecode instruction to memory space accessed by AI hardware, where the AI hardware is configured to run the virtual machine.

In a possible implementation, the processing module is specifically configured to: obtain a first meta-operator graph through conversion based on the computational graph, where the first meta-operator graph includes a plurality of meta-operators, the computational graph indicates a part or all of operational operations in the AI model, and the plurality of meta-operators all indicate a basic operational operation; and generate the at least one bytecode instruction based on the shape of the input tensor and the first meta-operator graph, where the plurality of meta-operators correspond to the at least one bytecode instruction.

In a possible implementation, the processing module is further configured to: convert each operator in the computational graph into one or more meta-operators, to obtain a converted computational graph; and divide the converted computational graph into a plurality of consecutive meta-operator graphs, where the plurality of meta-operator graphs include the first meta-operator graph, and each of the plurality of meta-operator graphs includes a plurality of meta-operators.

In a possible implementation, the obtaining module is further configured to obtain an operator invoking instruction, where the operator invoking instruction indicates to perform an operational operation corresponding to a target operator, and the operator invoking instruction includes the input tensor; and the processing module is further configured to generate the computational graph based on the target operator indicated in the operator invoking instruction, where the computational graph includes a plurality of meta-operators representing the target operator, and the plurality of meta-operators all indicate a basic operational operation.

In a possible implementation, the at least one bytecode instruction includes an instruction identifier, and the virtual machine is configured to invoke, based on the instruction identifier, the processing function corresponding to the at least one bytecode instruction to process the at least one bytecode instruction.

In a possible implementation, the at least one bytecode instruction includes a data type identifier, and the data type identifier indicates a data type of the input tensor.

In a possible implementation, the at least one bytecode instruction further indicates a storage address of the input tensor and a storage address of the output tensor, and the output tensor is a tensor obtained by performing the operational operation on the input tensor. In addition, both the storage address of the input tensor and the storage address of the output tensor are addresses in the local memory.

A third aspect of this application provides a data operation apparatus for a model. The apparatus may include a processor, the processor is coupled to a memory, the memory stores program instructions, and when the program instructions stored in the memory are executed by the processor, the method according to the first aspect or any one of the implementations of the first aspect is implemented. For details of steps that are performed by the processor and that are in the possible implementations of the first aspect, refer to the first aspect. Details are not described herein again.

A fourth aspect of this application provides a computer-readable storage medium. The computer-readable storage medium stores a computer program, and when the computer program is run on a computer, the computer is enabled to perform the method according to any one of the implementations of the first aspect.

A fifth aspect of this application provides a circuit system. The circuit system includes a processing circuit. The processing circuit is configured to perform the method according to any one of the implementations of the first aspect.

A sixth aspect of this application provides a computer program product. When the computer program product runs on a computer, the computer is enabled to perform the method according to any one of the implementations of the first aspect.

A seventh aspect of this application provides a chip system. The chip system includes a processor, configured to support a server or a threshold obtaining apparatus in implementing a function in any one of the implementations of the first aspect, for example, sending or processing data and/or information in the foregoing method. In a possible design, the chip system further includes a memory, and the memory is configured to store program instructions and data that are necessary for a server or a communication device. The chip system may include a chip, or may include a chip and another discrete component.

For beneficial effects of the second aspect to the seventh aspect, refer to the descriptions of the first aspect. Details are not described herein again.

### BRIEF DESCRIPTION OF DRAWINGS

FIG. 1 is a diagram of a system architecture 100 according to an embodiment of this application;
FIG. 2 is a diagram of a system architecture of an electronic device according to an embodiment of this application;
FIG. 3 is a schematic flowchart of a data operation method for a model according to an embodiment of this application;
FIG. 4 is a schematic flowchart of another data operation method for a model according to an embodiment of this application;
FIG. 5 is a diagram of a system architecture according to an embodiment of this application;
FIG. 6 is a schematic flowchart of generating a bytecode instruction according to an embodiment of this application;
FIG. 7 is a diagram of a system architecture in an actual application scenario according to an embodiment of this application;
FIG. 8A is a diagram of an execution procedure of an AI computing framework according to an embodiment of this application;
FIG. 8B is a schematic flowchart of interpreting and executing a bytecode instruction by a virtual machine according to an embodiment of this application;
FIG. 9 is a diagram of a system architecture in another actual application scenario according to an embodiment of this application;
FIG. 10 is a diagram of a structure of a data operation apparatus for a model according to an embodiment of this application;
FIG. 11 is a diagram of a structure of an execution device according to an embodiment of this application;
FIG. 12 is a diagram of a structure of a chip according to an embodiment of this application; and
FIG. 13 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in an electric manner or another similar form. This is not limited in this application. In addition, units or subunits described as separate parts may or may not be physically separate, may or may not be physical units, or may be distributed into a plurality of circuit units. A part or all of the units may be selected based on actual requirements to achieve the objectives of the solutions of this application.

For ease of understanding, the following first describes some technical terms used in embodiments of this application.

### (1) Neural network

A neural network may include neural cells, and may be specifically understood as a neural network having an input layer, a hidden layer, and an output layer. Generally, the first layer is the input layer, the last layer is the output layer, and intermediate layers are all hidden layers. A neural network having many hidden layers is referred to as a deep neural network (deep neural network, DNN). Work at each layer in the neural network may be described by using a mathematical expression ${y}^{⇀} = a \left(W⋅{x}^{⇀}+b\right)$. From a physical perspective, the work at each layer in the neural network may be understood as completing transformation from input space to output space (that is, from row space to column space of a matrix) by performing five operations on the input space (a set of input vectors). The five operations include: 1. dimension increasing/dimension reduction, 2. scaling up/down, 3. rotation, 4. translation, and 5. "bending". The operations 1, 2, and 3 are performed by " $W ⋅ {x}^{⇀}$", the operation 4 is performed by "+*b*", and the operation 5 is performed by "*a*( )". The word "space" is used herein for expression because a classified object is not a single thing, but a type of thing. Space is a set of all individuals of this type of thing. *W* is a weight matrix of each layer in the neural network, and each value in the matrix represents a weight value of a neuron at the layer. The matrix *W* determines the foregoing spatial transformation from the input space to the output space, that is, *W* of each layer in the neural network controls how to transform the space. An objective of training the neural network is to finally obtain weight matrices of all layers of a trained neural network. Therefore, a process of training the neural network is essentially a manner of learning control of spatial transformation, and more specifically, learning a weight matrix.

### (2) Self-attention network

A self-attention network is a neural network to which a self-attention mechanism is applied. A typical self-attention network includes a transformer model. The self-attention mechanism is actually an attention mechanism that associates different locations of a single sequence to compute a representation of the same sequence. The self-attention network is usually applied to fields such as machine reading, abstract abstraction, or image description.

### (3) AI model

An AI model is a mathematical model that learns and predicts data with specific regularity and predictability. Currently, the AI model usually includes a neural network. During running of the AI model, a computing process of learning data is referred to as training, and result prediction performed on input data is referred to as inference.

### (4) AI computing framework

An AI computing framework is a software platform used for computing expressing and computing processing for an AI model, such as TensorFlow, PyTorch, and MindSpore.

### (5) Operator

An operator is a basic computation unit of an AI model. Each operator represents specific computing semantic. Some common computing semantic represented by operators includes, for example, a convolution operation, a pooling operation, and an activation function operation.

### (6) Meta-operator

A meta-operator is an operator indicating a most basic operational operation, that is, the meta-operator cannot be expressed by combining other more basic operators. For example, some common meta-operators indicate basic operations such as addition, subtraction, multiplication, and division.

### (7) Composite operator

A composite operator is an operator that can be expressed by combining a plurality of meta-operators, for example, a convolution operator or a pooling operator.

### (8) Kernel function

A kernel function is an execution entity of an operator when the operator is running, that is, the kernel function is actually binary instruction code that can be directly executed by device hardware.

### (9) Tensor

A tensor is a type of multi-dimensional data, which usually represents input or output data during running of an operator.

### (10) Shape (shape)

A shape is a dimension representation of tensor data. For example, [3, 4] represents a 3*4 two-dimensional tensor.

### (11) Computational graph

A computational graph is a directed acyclic graph that includes an operator as a node and a tensor as an edge. On an AI model running platform, different AI models may be usually abstracted as corresponding computational graph structures for compilation and execution.

### (12) Bytecode

A bytecode is a binary file that contains an executable program and includes a sequence of op code/data pairs. Compared with machine instruction code that can be directly executed by hardware, the bytecode is actually intermediate code, that is, instruction code that needs to be interpreted and executed by software code, and cannot be directly executed by hardware.

### (13) Virtual machine

In embodiments, a virtual machine is an important tool in a programming language, is essentially a software module, and can convert high-level language code (for example, a bytecode) into a low-level machine instruction, so that the code can be run on different operating systems and hardware platforms. For example, a Java virtual machine in a Java language may compile Java code into a bytecode, and then convert, via an interpreter or an instant compiler, the bytecode into a machine instruction for execution.

In addition, a virtual machine instance is a virtual machine running on a hardware device (for example, a processor), that is, the virtual machine instance is a running virtual machine. Based on software code of a same virtual machine, a plurality of virtual machine instances with a same configuration can be quickly created.

### (14) Machine instruction (Machine Instructions)

A machine instruction is an instruction that can be directly identified and executed by computer hardware (for example, a central processing unit (Central Processing Unit, CPU)), and is represented in a form of binary code. A machine instruction usually includes two parts: operation code and operand. The operation code indicates an operation to be completed by the machine instruction, that is, a function of the machine instruction. The operand indicates an object participating in an operation, a location where an operation result is stored, and the like.

### (15) Global memory

A global memory is memory space that is in device hardware (for example, a GPU) and that is used to store a global variable and a static variable. Variables stored in the global memory can be accessed and modified by all objects running in the device hardware. To be specific, the global memory is shared by a plurality of cores, can be accessed by all processor cores in the device hardware, and can also be accessed by host hardware.

### (16) Local memory

A local memory is private memory space allocated to each processor core in device hardware, can be accessed only by a corresponding processor core, and cannot be accessed by another processor core.

Currently, for traditional AI computing frameworks, an AI model is usually run in a static computational graph manner. To be specific, a shape of input data of the AI model is unchanged. For example, the input data of the AI model is an image with a fixed size. In this way, the conventional AI computing framework can generate a corresponding static computational graph based on a structure of the AI model and the shape of the input data, to obtain a kernel function corresponding to a static computational graph through compilation in advance, so that the kernel function obtained through compilation in advance is used to process actual input data of the AI model in a model execution phase.

However, with development of AI technologies, there are more types of AI models, and AI models with uncertain lengths of input data or intermediate data continuously emerge, for example, a transformer model used to process a natural language sequence. For the AI models with uncertain lengths of input data or intermediate data, computational graphs corresponding to the AI models are actually dynamic computational graphs. In other words, a shape of input data of the computational graphs is not fixed, but can change. Therefore, for the AI models corresponding to the dynamic computational graphs, because a shape of an input tensor corresponding to the AI models can be known only when the AI models are specifically executed, the conventional AI computing framework cannot execute a kernel function compilation phase for the AI models in advance. Consequently, a kernel function compilation phase needs to be performed based on actual input data each time the AI models are run, resulting in long running duration of the AI models.

In view of this, embodiments provide a data operation method for a model. Based on an input tensor of an operation in an AI model during actual running, a computational graph corresponding to the operation in the AI model is compiled into a bytecode instruction, and then the bytecode instruction is interpreted and run by a virtual machine that is preconfigured with a corresponding processing function, to perform the operation in the AI model. This effectively avoids execution of a conventional complex compilation process and shortens running duration of the AI model.

For ease of understanding, the following first describes a system architecture to which the data operation method for a model provided in embodiments of this application is applied.

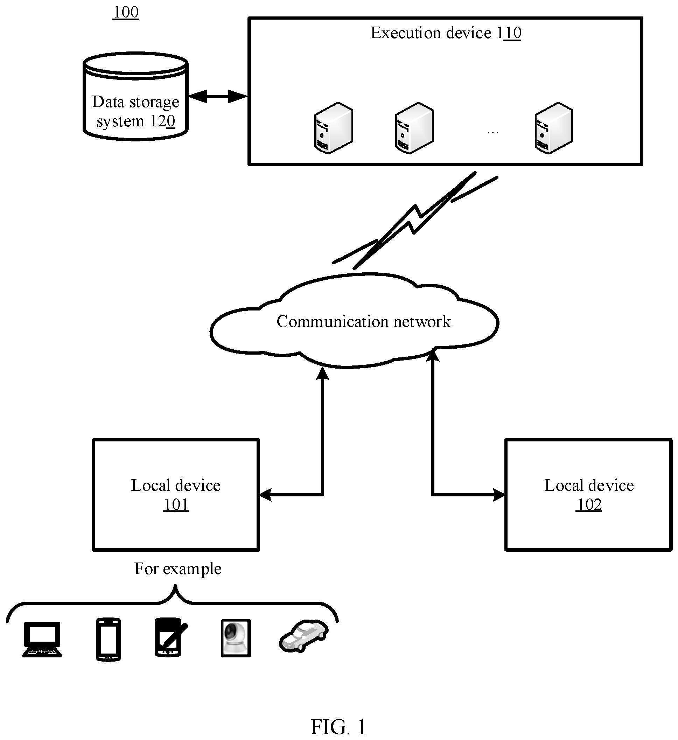

FIG. 1 is a diagram of a system architecture 100 according to an embodiment of this application. As shown in FIG. 1, in the system architecture 100, an execution device 110 may be implemented by using one or more servers. Optionally, the execution device 110 cooperates with another computing device, for example, a device like a data storage, a router, or a load balancer. The execution device 110 may be disposed on one physical site, or distributed on a plurality of physical sites. The execution device 110 may use data in a data storage system 120 or invoke program code in the data storage system 120, to implement the data operation method for a model provided in embodiments of this application, so as to run an AI model.

A user may operate respective user equipment (for example, a local device 101 and a local device 102) to interact with the execution device 110. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 110 via a communication network of any communication mechanism/communication standard. The communication network may be a wide area network, a local area network, a point-to-point connection, or any combination thereof.

In an implementation, the execution device 110 is configured to: implement the data operation method for a model provided in embodiments of this application, and send an obtained operation result to the local device 101 and the local device 102 via the communication network, so that the local device 101 and the local device 102 can obtain the operation result of the AI model, for example, obtain an image classification result or a translation result output by the AI model.

In another implementation, one or more aspects of the execution device 110 may be implemented by each local device. For example, the local device 101 may provide local data or feed back a computation result for the execution device 110, or perform the data operation method for a model provided in embodiments of this application. In other words, the execution device 110 may deliver the AI model or a computational graph corresponding to the AI model to the local device 101 via the communication network, and the local device 101 performs the data operation method for a model provided in embodiments of this application.

It should be noted that all functions of the execution device 110 may also be implemented by the local device. For example, the local device 101 implements a function of the execution device 110 and provides a service for a user of the local device 101, or provides a service for a user of the local device 102.

In conclusion, the model training method provided in embodiments of this application may be applied to an electronic device, for example, the execution device 110, the local device 101, or the local device 102. For example, the electronic device may be, for example, a device like a server, a wireless electronic device in industrial control, a smartphone (mobile phone), a personal computer (personal computer, PC), a notebook computer, a tablet computer, an autonomous driving vehicle, or an intelligent camera. For ease of understanding, the following describes the method by using an example in which the method provided in embodiments of this application is applied to a server.

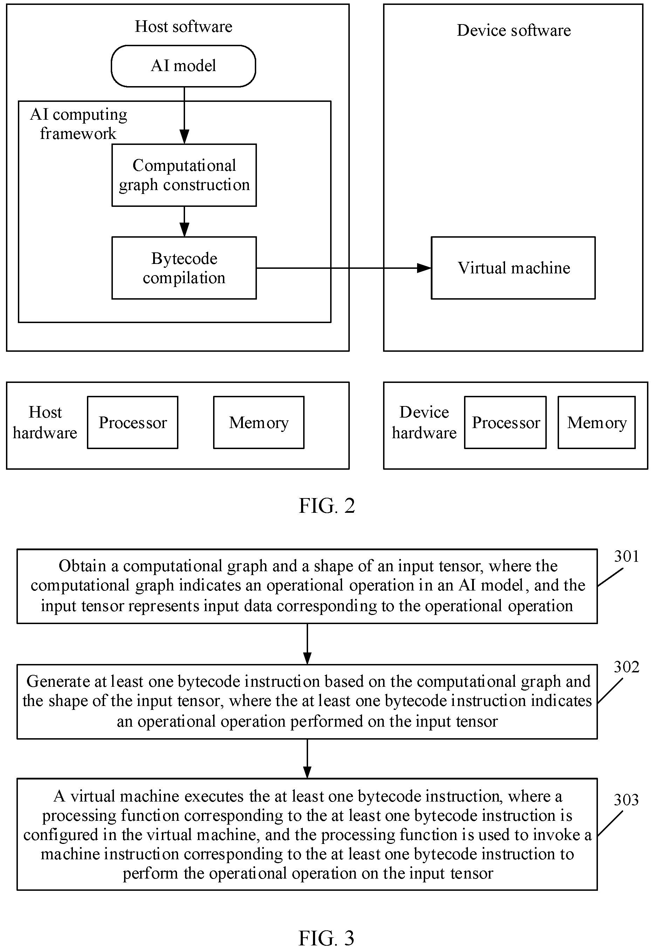

FIG. 2 is a diagram of a system architecture of an electronic device according to an embodiment of this application. The system architecture shown in FIG. 2 includes host hardware and device hardware. The host hardware includes a processor and a memory, and is configured to: execute related functions of host software modules such as an AI model and an AI computing framework, and cache intermediate data. The device hardware includes a processor and a memory, and is configured to: execute code of device software to implement a function of a virtual machine, and cache intermediate data. The host hardware and the device hardware may be, for example, deployed on a same electronic device. For example, both the host hardware and the device hardware are deployed on a same server. The host hardware includes a CPU and a memory on the server, and the device hardware includes, for example, a graphics processing unit (graphics processing unit, GPU), a neural network processing unit (Neural Process Unit, NPU), or a tensor processing unit (Tensor Processing Unit, TPU) on the server.

The AI computing framework running on the host hardware can obtain the AI model, construct a corresponding computational graph based on the AI model, and then perform bytecode compilation based on the computational graph and an actual input tensor of the AI model, to obtain a bytecode instruction. Then, the host hardware sends the bytecode instruction obtained through compilation to the virtual machine on the device hardware, and the virtual machine executes the bytecode instruction, to perform an operational operation indicated in the AI model, and complete running of the AI model.

It should be noted that, in some scenarios (for example, the device hardware is not available or no idle device hardware is available), the host hardware may also undertake a function of the device hardware, in other words, the virtual machine is run on the host hardware to interpret and execute the bytecode instruction.

The foregoing describes the system architecture to which the method provided in embodiments is applied. The following describes in detail a specific execution procedure of the method provided in embodiments of this application with reference to the accompanying drawings.

FIG. 3 is a schematic flowchart of a data operation method for a model according to an embodiment of this application. As shown in FIG. 3, the data operation method for a model includes the following steps 301 to 303.

Step 301: Obtain a computational graph and a shape of an input tensor, where the computational graph indicates an operational operation in an AI model, and the input tensor represents input data corresponding to the operational operation.

In this embodiment, the computational graph is a directed acyclic graph that includes an operator as a node and a tensor as an edge, and indicates how to perform an operational operation on a tensor. In addition, the computational graph is obtained based on the AI model, and indicates the operational operation in the AI model, for example, indicates an operation like a convolution operation or a pooling operation in the AI model.

Optionally, the computational graph, for example, indicates all operational operations in the AI model, or indicates a part of operational operations in the AI model (for example, indicates an operation at a neural network layer or an operation of an operator in the AI model). This is not specifically limited in embodiments.

Because the computational graph actually indicates how to perform an operational operation on a tensor, in this embodiment, the shape of the input tensor corresponding to the computational graph is further obtained. In other words, the input tensor is the input data corresponding to the operational operation indicated by the computational graph. For example, the input tensor is, for example, actual input data of the entire AI model. For example, when the AI model is a natural language processing model, the input tensor is, for example, a tensor corresponding to a text that needs to be input into the natural language processing model. Alternatively, the input tensor is, for example, intermediate data generated during running of the AI model, for example, tensor data output by the neural network layer in the AI model. The input tensor is multi-dimensional data; and the shape of the input tensor is not fixed, and may be determined based on an actual running status of the AI model. In addition, the input tensor may include, for example, one or more tensors, which is specifically determined based on a quantity of pieces of input data indicated by the computational graph. This is not specifically limited in embodiments.

It should be noted that, in this embodiment, the shape of the input data indicated by the obtained computational graph is unknown, and the shape of the input data processed based on the computational graph can be determined only after the shape of the input tensor is obtained. In addition, the shape of the input tensor may be determined after the actual input tensor is obtained, or may be obtained in advance in a process of generating the actual input tensor.

In this embodiment, the computational graph may be obtained in a plurality of manners.

In a possible implementation, the computational graph may be generated based on the AI model. To be specific, in a process of running the AI model, the computational graph corresponding to the AI model is first generated, and then the AI model is run by executing the computational graph.

For example, after the AI model that needs to be run is obtained, all or a part of operations in the AI model may be converted into the computational graph based on an operational operation at each neural network layer in the AI model, to describe a structure of the AI model in a form of a graph.

In another possible implementation, in a process of running the AI model, for tensor computing during the running of the AI model, an operator invoking interface of an AI computing framework is invoked to trigger computing of an operator, so as to generate a computational graph corresponding to the operator. To be specific, in the process of running the AI model, the computational graph corresponding to the entire AI model is not generated. Instead, the operator in the AI model is processed by invoking the operator interface and generating the corresponding computational graph.

For example, during the running of the AI model, an operator invoking instruction may be obtained. The operator invoking instruction indicates to perform an operational operation corresponding to a target operator, and the operator invoking instruction includes the foregoing input tensor. Specifically, the target operator is, for example, one or more operators indicated in the AI model, for example, a convolution operator or a pooling operator. The input tensor included in the operator invoking instruction is input data of the target operator.

Then, the computational graph is generated based on the target operator indicated in the operator invoking instruction. The computational graph is generated based on the target operator, and indicates, in an operator node and directed edge manner, to perform an operational operation indicated by the target operator on the input tensor. In addition, the computational graph includes a plurality of meta-operators representing the target operator, and the plurality of meta-operators all indicate a basic operational operation. In other words, the computational graph itself includes a plurality of meta-operators, and does not include a composite operator formed by combining a plurality of meta-operators.

Step 302: Generate at least one bytecode instruction based on the computational graph and the shape of the input tensor, where the at least one bytecode instruction indicates an operational operation performed on the input tensor.

In this embodiment, after the computational graph and the shape of the input tensor are obtained, a type of the operational operation that needs to be performed and a shape of specific input data corresponding to the operational operation can be determined. Therefore, the at least one bytecode instruction can be generated based on the computational graph and the shape of the input tensor, and the at least one bytecode instruction indicates, in a binary instruction manner, the operational operation performed on the input tensor. In addition, the at least one bytecode instruction is actually bytecode, and needs to be interpreted and executed by a software module, but cannot be directly executed by hardware.

In addition, because the shape of the input tensor is known, how to store the input tensor and an output tensor may be determined. To be specific, the at least one bytecode instruction may further indicate a storage address of the input tensor and a storage address of the output tensor, where the output tensor is a tensor obtained by performing the operational operation on the input tensor. In this way, when the at least one bytecode instruction is executed, the input tensor on which the operational operation needs to be performed, a type of the operational operation performed on the input tensor, and a storage address of an operation result obtained by performing the operational operation on the input tensor can be obtained based on the at least one bytecode instruction, to ensure that a corresponding operational operation in the AI model can be performed by executing the at least one bytecode instruction.

Optionally, in a process of generating the bytecode instruction based on the computational graph and the input tensor, the bytecode instruction may be generated at a granularity of a meta-operator, that is, one meta-operator corresponds to one or more bytecode instructions.

For example, when the computational graph is constructed based on all or a part of the operations in the AI model, a first meta-operator graph may be obtained through conversion based on the computational graph. The first meta-operator graph includes a plurality of meta-operators, and the plurality of meta-operators all indicate a basic operational operation. To be specific, a meta-operator is a most basic unit for performing an operational operation, and the meta-operator cannot be obtained by combining other more basic operators. In other words, an operator indicated in the computational graph may be one or more composite operators, and these composite operators include most basic meta-operators. A process of converting a computational graph into a meta-operator graph is actually to split a composite operator in the computational graph into a plurality of meta-operators for representation, so that computational logic of the computational graph is represented by using a most basic meta-operator. For example, it is assumed that the operator indicated in the computational graph is SqrtGrad(x, y), the operator may be split into two meta-operators, that is, SqrtGrad(x, y)=Div(Square(x), y), where SqrtGrad() represents square root grading, Div() represents an exact division operation, and Square() represents a squaring operation.

Then, a plurality of bytecode instructions are generated based on the shape of the input tensor and the first meta-operator graph, where the plurality of bytecode instructions include the foregoing at least one bytecode instruction. The plurality of bytecode instructions correspond to the plurality of meta-operators indicated by the meta-operator graph, that is, each bytecode instruction corresponds to one meta-operator. Generally, one meta-operator may correspond to one bytecode instruction. When a shape of a tensor operated by some meta-operators is excessively large, one bytecode instruction may be difficult to represent one meta-operator. Therefore, one meta-operator may correspond to a plurality of bytecode instructions.

Because the bytecode instruction is processed by using a processing function configured in a virtual machine, and all operators can be obtained by combining meta-operators, generating the bytecode instruction at a granularity of a meta-operator can reduce a type of a generated bytecode instruction as much as possible, thereby reducing a quantity of processing functions preconfigured in the virtual machine, and reducing implementation complexity of the virtual machine.

Optionally, in a process of obtaining the first meta-operator graph through conversion based on the computational graph, each operator in the computational graph may be converted into one or more meta-operators, to obtain a converted computational graph. In other words, some operators in the computational graph may be composite operators formed by combining a plurality of meta-operators. Therefore, all the operators in the computational graph may be represented in a meta-operator manner, to obtain the converted computational graph formed by the meta-operators. Then, the converted computational graph is divided into a plurality of consecutive meta-operator graphs, where the plurality of meta-operator graphs include the first meta-operator graph, and each of the plurality of meta-operator graphs includes a plurality of meta-operators. In other words, for the converted computational graph, a plurality of adjacent meta-operators may be fused, to obtain a meta-operator graph. In this way, the meta-operators in the converted computational graph are classified into a plurality of portions, and the plurality of meta-operators in each portion may be fused into one meta-operator graph.

In this solution, the converted computational graph is split into a plurality of meta-operator graphs for processing, so that it can be ensured that the virtual machine executes a single meta-operator graph each time, thereby avoiding a case in which memory of a device running the virtual machine is insufficient due to an excessive quantity of meta-operators that are continuously processed.

Step 303: The virtual machine executes the at least one bytecode instruction to obtain an output tensor, where a processing function corresponding to the at least one bytecode instruction is configured in the virtual machine, and the processing function is used to invoke a machine instruction corresponding to the at least one bytecode instruction to perform the operational operation on the input tensor.

In this embodiment, the virtual machine is a pre-implemented software module, and is configured to implement interpretation and execution of the bytecode instruction. Specifically, a plurality of processing functions are configured in the virtual machine, and different processing functions are used to process different types of bytecode instructions, to ensure that all bytecode instructions that indicate different operational operations are processed by using corresponding processing functions. Therefore, after the virtual machine obtains the at least one bytecode instruction, the virtual machine may invoke, based on a type of the at least one bytecode instruction, a corresponding processing function to process the at least one bytecode instruction.

Specifically, the virtual machine in this solution may also be referred to as a kernel function, is an execution entity of an operator when the operator is running, and can interpret and execute a bytecode instruction, to implement running of the operator. A specific implementation of the virtual machine may be binary instruction code that can be directly executed by device hardware (for example, a GPU, an NPU, or a TPU).

For example, the at least one bytecode instruction includes an instruction identifier, and the instruction identifier uniquely identifies the type of the at least one bytecode instruction. In other words, different types of bytecode instructions are marked by using different instruction identifiers. For example, a bytecode instruction indicating that an operational operation to be performed is an addition operation may be represented by an instruction identifier 00; a bytecode instruction indicating that an operational operation to be performed is a subtraction operation may be represented by an instruction identifier 01; a bytecode instruction indicating that an operational operation to be performed is a multiplication operation may be represented by an instruction identifier 10; and a bytecode instruction indicating that an operational operation to be performed is a division operation may be represented by an instruction identifier 11. In this way, the virtual machine may invoke, based on the instruction identifier in the at least one bytecode instruction, the processing function corresponding to the at least one bytecode instruction to process the at least one bytecode instruction.

In other words, an instruction identifier is set in a bytecode instruction, so that a type of the bytecode instruction can be uniquely identified, the virtual machine quickly invokes, based on the instruction identifier, a corresponding processing function to process the bytecode instruction, thereby increasing efficiency of interpreting and executing the bytecode instruction.

For example, the type of the bytecode instruction may include the following types: a migration type and a computation type. The migration type may specifically include: a Load type, representing that tensor data is migrated from a global memory to a local memory; and a Store type, representing that tensor data is written from the local memory back to the global memory. The computation type may include algebraic computation (for example, Add, Sub, Mul, Div, Sqrt, Abs, Exp, or Pow), specification computation (for example, Sum (sum), Max (take a maximum value of tensor data), or Min (take a maximum value of tensor data)), and comparison computation (for example, Greater, Less, or Equal).

The processing function configured in the virtual machine is also pre-implemented software code. In a process of processing the bytecode instruction by the processing function, a tensor on which an operational operation needs to be performed is read from the bytecode instruction, a corresponding machine instruction is invoked, based on an operational operation indicated by the bytecode instruction, to perform an operational operation on the read tensor, and finally an operation result obtained by performing the operational operation is stored in a storage address specified by the bytecode instruction.

In conclusion, based on an input tensor of an operation in the AI model during actual running, a computational graph corresponding to the operation in the AI model is compiled into a bytecode instruction, and then the bytecode instruction is interpreted and run by a virtual machine that is preconfigured with a corresponding processing function, to perform the operation in the AI model. This effectively avoids execution of a conventional complex compilation process and shortens running duration of the AI model.

Specifically, compared with a model compilation process executed for an AI model in a related conventional technology, in this embodiment, a simple bytecode instruction is generated only based on a computational graph and an actual input tensor, and a complete compilation process (that is, preprocessing, syntax parsing, instruction generation, assembly, linking, and file outputting) does not need to be performed. In addition, the generated bytecode instruction can be interpreted and executed by a pre-implemented processing function in the virtual machine, to ensure a high generation and execution speed of the bytecode instruction, thereby effectively increasing running efficiency of the AI model.

In addition, in the related technology, the model compilation process executed for the AI model is finally to generate a machine instruction that can be directly executed by hardware, and a compilation granularity is small. For example, for a common addition operation between two tensors, a plurality of addition instructions indicating to add two integers need to be generated. Therefore, complete computational logic of an operator can be completely expressed only by usually generating a plurality of machine instructions. However, in this embodiment, a large-granularity bytecode instruction corresponding to a specific tensor is used, so that computational logic of one operator can be expressed based on a small quantity of instructions. For example, for an addition operation between two tensors, addition of the two tensors can be indicated by merely one bytecode instruction.

Optionally, when Step 302 (namely, a bytecode instruction compilation process) is implemented by using host hardware (for example, a CPU), and Step 303 (namely, a bytecode instruction interpretation and execution process) is implemented by using dedicated device hardware (for example, a GPU), after the at least one bytecode instruction is generated, the at least one bytecode instruction may be further migrated to memory space accessed by AI hardware, where the AI hardware is configured to run the virtual machine. In this way, the at least one bytecode instruction is interpreted and executed by running the virtual machine on the AI hardware. For example, the AI hardware is, for example, hardware like a GPU, an NPU, or a TPU, which is specially used to implement AI computing and can accelerate the AI computing.

For ease of understanding, the following describes in detail a process of generating a bytecode instruction and interpreting and executing the bytecode instruction by a virtual machine.

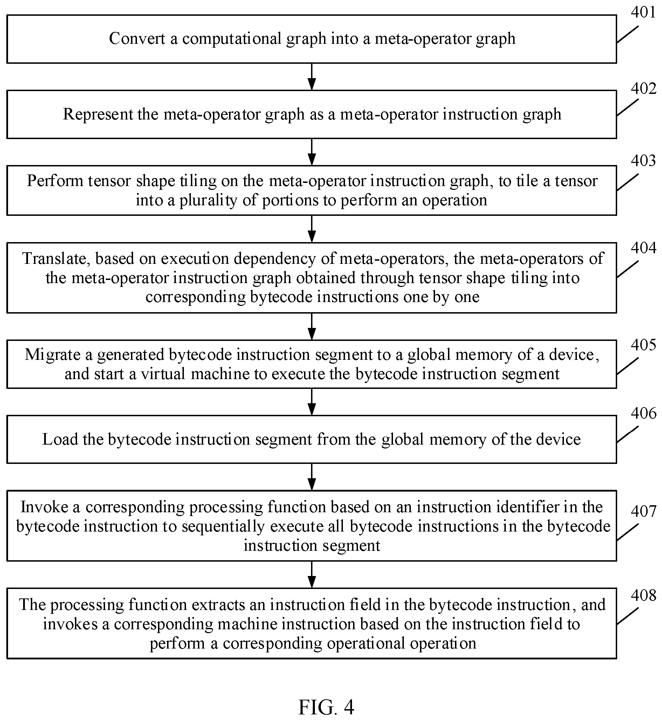

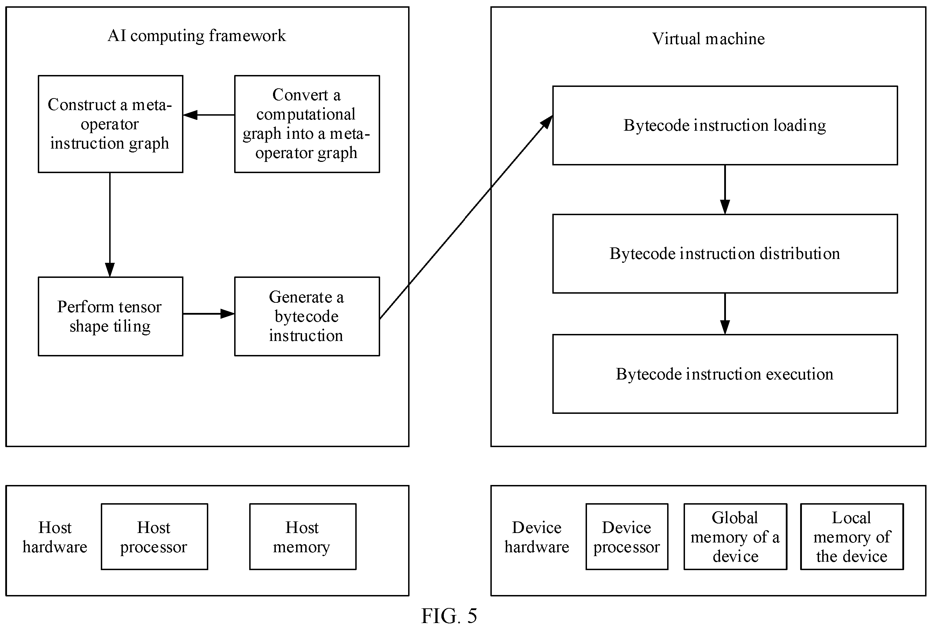

For example, refer to FIG. 4 and FIG. 5. FIG. 4 is a schematic flowchart of another data operation method for a model according to an embodiment of this application. FIG. 5 is a diagram of a system architecture according to an embodiment of this application. The method shown in FIG. 4 may be applied to the system architecture shown in FIG. 5. As shown in FIG. 4, an execution procedure of the data operation method for a model may include the following steps 401 to 408.

Step 401: Convert a computational graph into a meta-operator graph.

In this embodiment, because a granularity of processing a bytecode instruction by a processing function in a virtual machine corresponds to a meta-operator, to facilitate generation of the bytecode instruction, a computational graph corresponding to an AI model may be first represented as a corresponding meta-operator graph.

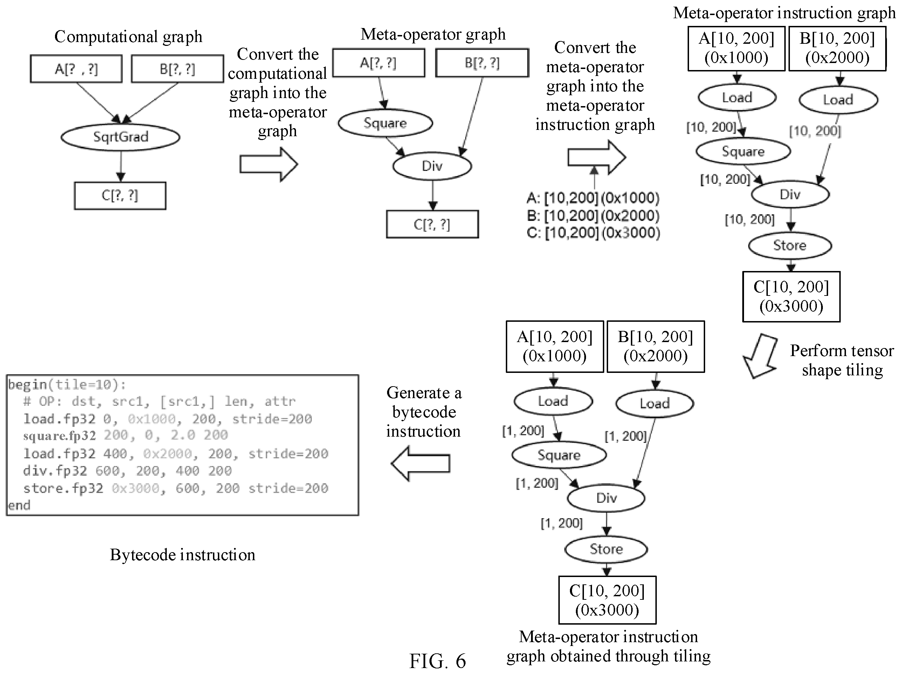

For example, refer to FIG. 6. FIG. 6 is a schematic flowchart of generating a bytecode instruction according to an embodiment of this application. As shown in FIG. 6, operator nodes included in a computational graph are nodes representing a composite operator. The composite operator represented in the computational graph is split into a plurality of meta-operators, so that the operator nodes in the computational graph can be converted into a plurality of meta-operator nodes that are sequentially connected, to convert the computational graph into a meta-operator graph. Specifically, in the computational graph shown in FIG. 6, an SqrtGrad operator is an operator on which an operation is to be performed, input tensors of the SqrtGrad operator are A and B respectively, and an output tensor is C. In addition, shapes corresponding to A, B, and C are all two-dimensional, and specific dimension values are unknown. The SqrtGrad operator as the composite operator is split into a Square meta-operator and a Div meta-operator, so that the computational graph can be converted into the meta-operator graph. That is, C=SqrtGrad(A, B)=Div(Square(A), B).

Step 402: Represent the meta-operator graph as a meta-operator instruction graph.

When an actual input tensor is obtained, the meta-operator graph may be represented as the meta-operator instruction graph. Specifically, on the basis of the meta-operator graph, shapes and storage addresses of the input tensor, an intermediate tensor, and an output tensor in the meta-operator graph are updated based on a shape of the actual input tensor, to facilitate generation of the bytecode instruction based on the meta-operator instruction graph. Simply speaking, in the meta-operator instruction graph, content required for generating the bytecode instruction may be represented in a form of a graph, that is, a shape and a storage address of a tensor and an operational operation performed on the tensor.

In addition, when the bytecode instruction is executed by the virtual machine in device hardware, the input tensor and the output tensor are usually stored in a global memory of the device, and the intermediate tensor obtained by performing an operation on the input tensor is stored in a local memory of the device. To be specific, when processing the bytecode instruction, a processor core in the device hardware stores the generated intermediate variable in a local memory corresponding to the processor core, to facilitate quick execution of computation. After executing the bytecode instruction in the meta-operator instruction graph, the processor core may store an operation result (namely, the output tensor) obtained through computation in a global memory, to facilitate execution of subsequent other computation. In view of this, in a process of representing the meta-operator graph as the meta-operator instruction graph, a Load meta-operator and a Store meta-operator may be further added to a boundary of the meta-operator graph. The Load meta-operator is used to load the input tensor from the global memory of the device to the local memory of the device, and the Store meta-operator is used to load the output tensor from the local memory of the device to the global memory of the device.

As shown in FIG. 6, in a process of converting the meta-operator graph into a meta-operator instruction graph, shapes of the input tensor A, the input tensor B, an intermediate tensor, and the output tensor C in the meta-operator graph are first refreshed based on shapes and storage addresses of the actual input tensor A and input tensor B, and storage addresses of the input tensor A, the input tensor B, and the output tensor C are refreshed. In addition, a Load meta-operator and a Store meta-operator are added to a boundary (namely, upper and lower sides of the meta-operator graph) of the meta-operator graph, to load the input tensor A and the input tensor B to a local memory of device hardware and store the output tensor in a global memory of the device hardware.

Specifically, shapes of the input tensor A, the input tensor B, the intermediate tensor, and the output tensor C are all [10, 200], a storage address of the input tensor A is 0x1000, a storage address of the input tensor B is 0x2000, and a storage address of the input tensor C is 0x3000. The intermediate tensor is a tensor obtained by performing an operation corresponding to a meta-operator on the input tensor A and the input tensor B, for example, a tensor obtained by performing an operation corresponding to a meta-operator like a Load meta-operator, a Square meta-operator, or a Div meta-operator on the input tensor A.

Step 403: Perform tensor shape tiling on the meta-operator instruction graph, to tile a tensor into a plurality of portions to perform an operation.

In this embodiment, to facilitate allocation of AI computing to a plurality of processor cores for parallel processing, tensor shape tiling may be performed on the meta-operator instruction graph in advance, so that when a bytecode instruction is subsequently generated, the generated bytecode instruction can indicate to tile a tensor into a plurality of portions for parallel operation execution.

Specifically, in a process of performing tensor shape tiling on the meta-operator instruction graph, how to tile a shape of a tensor, that is, a quantity of portions into which the tensor is tiled may be determined based on a shape of an input tensor in the meta-operator instruction graph, a local memory constraint of the device hardware, and a quantity of processor cores of the device hardware. The local memory constraint of the device hardware means that a local memory corresponding to each processor core in the device hardware is limited, and when processing a meta-operator instruction, the processor core needs to store a generated intermediate tensor in the local memory. Therefore, after the tensor is tiled, a data amount of an intermediate tensor generated in a process of processing a bytecode instruction by each processor core cannot be greater than a space size of a local memory corresponding to the processor core. In addition, to use each processor core in the device hardware as much as possible, during tensor tiling, a quantity of portions obtained by tiling the tensor may be greater than or equal to a quantity of processor cores in the device hardware, to ensure that each processor core in the device hardware can perform tensor computing.

For example, as shown in FIG. 6, the shapes of the input tensor A and the input tensor B are both [10, 200], and the tensor may be tiled from a left dimension, so that each input tensor is tiled into 10 portions. Therefore, each of the input tensor A and the input tensor B is tiled into 10 portions, and a shape of each portion of the tensor obtained through tiling is [1, 200].

Step 404: Translate, based on execution dependency of meta-operators, the meta-operators of the meta-operator instruction graph obtained through tensor shape tiling into corresponding bytecode instructions one by one.

Because a granularity of processing the bytecode instruction corresponds to the meta-operator, the meta-operator nodes in the meta-operator instruction graph may be sequentially translated into corresponding bytecode instructions based on an execution dependency sequence of the meta-operators in the meta-operator instruction graph. In addition, for the intermediate tensor, address space needs to be allocated to the intermediate tensor in the local memory of the device hardware, and it is ensured that the intermediate tensor is not overwritten before a lifetime ends.

For the generated bytecode instruction, the bytecode instruction includes an instruction identifier indicating a processing execution function corresponding to the bytecode instruction. The bytecode instruction further includes a storage address of tensor data on which an operation is to be performed, a type of an operational operation that needs to be performed on the tensor data, and a storage address of a tensor obtained by performing the operation. Read and write objects of different bytecode instructions are multi-dimensional tensor data. When the shape of the input tensor changes, the addresses for storing the input tensor and the output tensor inevitably change. As a result, the bytecode instruction changes.

It should be noted that, when the shape of the tensor is tiled, the bytecode instruction may further indicate to perform shape tiling on the tensor, so that the virtual machine can perform a tensor operation in parallel by using a plurality of processor cores when interpreting and executing the bytecode instruction.

For example, the at least one bytecode instruction described in the foregoing embodiments is used as an example. The at least one bytecode instruction may further indicate to tile the input tensor into a plurality of portions to separately perform an operational operation. In this way, when the at least one bytecode instruction is interpreted and executed by the virtual machine, the at least one bytecode instruction may be processed in parallel by using a plurality of virtual machine instances located in different processor cores, and different virtual machine instances in the plurality of virtual machine instances are used to process different data in the input tensor. In other words, the bytecode instruction indicates to tile the tensor, so that the tensor can be tiled when the bytecode instruction is interpreted and executed, and the tensor can be allocated to a plurality of processor cores for parallel processing, thereby implementing parallel processing of a tensor operation, and increasing efficiency of AI operating.

Optionally, the at least one bytecode instruction includes a tile quantity, and the tile quantity indicates a quantity of tiles of the input tensor. In addition, the tile quantity is greater than or equal to a quantity of the plurality of processor cores. In this way, the bytecode instruction indicates the quantity of tiles of the tensor, so that when the bytecode instruction is interpreted and executed by the virtual machine, the input tensor can be quickly tiled into a plurality of portions based on tensor tiling and sent to a corresponding processor core for processing, and the virtual machine does not need to additionally determine how to tile the tensor, thereby increasing efficiency of AI operating.

In addition, in a case in which the meta-operator instruction graph includes the Load meta-operator and the Store meta-operator, a corresponding data migration instruction further needs to be generated when a bytecode instruction is generated.

The foregoing embodiment of generating the at least one bytecode instruction is used as an example. In a process of generating the bytecode instruction, a first bytecode instruction and a second bytecode instruction may be generated based on the computational graph and the input tensor. The first bytecode instruction indicates to migrate the input tensor from the global memory to the local memory, and the second bytecode instruction indicates to migrate, from the local memory to the global memory, the output tensor obtained by processing the input tensor. In this way, when the bytecode instruction is executed by the virtual machine, specifically, the first bytecode instruction, the at least one bytecode instruction, and the second bytecode instruction may be sequentially executed by the virtual machine.

In conclusion, in a bytecode instruction generation phase, a corresponding data migration instruction is additionally generated for an execution status of the bytecode instruction on hardware, so that a tensor can be migrated between the global memory and the local memory, it is ensured that different processor cores on the hardware can smoothly perform an operation on the tensor, and it is ensured that a plurality of processor cores can perform tensor operations in parallel, thereby improving implementability of the solution.

For example, as shown in FIG. 6, in a process of generating a bytecode instruction for the meta-operator instruction graph, a corresponding bytecode instruction may be generated for each meta-operator in the meta-operator instruction graph, and the generated bytecode instruction is actually in a binary format. For ease of understanding, in FIG. 6, a text form is used for presentation. One meta-operator instruction graph corresponds to one bytecode instruction segment, and the bytecode instruction segment begins with begin and ends with end. Each bytecode instruction corresponds to a meta-operator, and includes context information related to instruction execution. In addition, a quantity of portions obtained through tensor shape division is marked at the beginning of the bytecode instruction segment, that is, tile=10 shown in FIG. 6, representing that the tensor is divided into 10 portions to perform a parallel operation.

It should be noted that, when a plurality of processor cores are used to process the bytecode instruction, the plurality of processor cores actually process a same bytecode instruction, but the processor core determines, based on a tiling status of a tensor and a core number of a current processor core, a part of tensor content that is in the entire input tensor and on which an operational operation needs to be performed, so that each processor core separately processes a part of the content of the input tensor.

Step 405: Migrate a generated bytecode instruction segment to the global memory of the device, and start the virtual machine to execute the bytecode instruction segment.

A process of generating the bytecode instruction is actually executed by host hardware (for example, a CPU), the virtual machine configured to interpret and execute the bytecode instruction is deployed on device hardware (for example, a GPU), and the virtual machine can access only a memory of the device hardware. Therefore, after the bytecode instruction is generated, the generated bytecode instruction may be migrated from a memory of the host hardware to the global memory of the device hardware, and the virtual machine on the device hardware is started to execute the bytecode instruction.

Generally, when generating a bytecode instruction, the host hardware usually stores the bytecode instruction in a specific sequence. For example, a plurality of bytecode instructions corresponding to one meta-operator graph are placed in a continuous memory area, to obtain a bytecode instruction segment including the plurality of bytecode instructions, that is, each bytecode instruction segment includes a segment of continuously stored bytecode instructions. In this way, in a process of performing bytecode instruction migration, each bytecode instruction segment generated by the host hardware may be migrated from the host hardware to the global memory of the device by using a bytecode instruction segment as a unit.

Step 406: Load the bytecode instruction segment from the global memory of the device.

In a process in which the virtual machine interprets and executes the bytecode instruction, the virtual machine may allocate the bytecode instruction segment to one or more processor cores for processing. To facilitate the processor core to interpret and execute the bytecode instruction segment, the bytecode instruction segment may be first migrated from the global memory of the device to a local memory corresponding to the processor core, and then the processor core reads each bytecode instruction in the bytecode instruction segment in the local memory. In addition, the processor core may alternatively directly read the bytecode instruction segment from the global memory.

Step 407: Invoke a corresponding processing function based on an instruction identifier in the bytecode instruction to sequentially execute all bytecode instructions in the bytecode instruction segment.

After the bytecode instruction segment is migrated to the local memory of the device, the virtual machine may sequentially invoke, based on an execution sequence of a plurality of bytecode instructions in the bytecode instruction segment, corresponding processing functions to execute corresponding bytecode instructions, to sequentially process the plurality of bytecode instructions according to a specific sequence.

In a process of processing any bytecode instruction, the virtual machine may determine, based on an instruction identifier in the bytecode instruction, an operation type corresponding to the bytecode instruction, and then invoke a corresponding processing function to interpret and execute the bytecode instruction. Bytecode instructions of different types are represented by different instruction identifiers, and the bytecode instructions of different types respectively correspond to different processing functions.

Step 408: The processing function extracts an instruction field in the bytecode instruction, and invokes a corresponding machine instruction based on the instruction field to perform a corresponding operational operation.

In a process of processing the bytecode instruction, the processing function may extract the instruction field in the bytecode instruction, for example, a field indicating an operational operation in the bytecode instruction, a field indicating a storage address of an input tensor, and a field indicating a storage address of an output tensor. In this way, after the processing function extracts these instruction fields, the type of the operational operation indicated by the bytecode instruction and the storage address of the tensor data on which the operational operation needs to be performed may be determined, and then the corresponding machine instruction is invoked to perform the corresponding operational operation on the tensor.

The foregoing describes in detail the process of generating the bytecode instruction and interpreting and executing the bytecode instruction by the virtual machine. For ease of understanding, the following describes in detail a process of running an AI model based on the foregoing described process with reference to a specific instance.

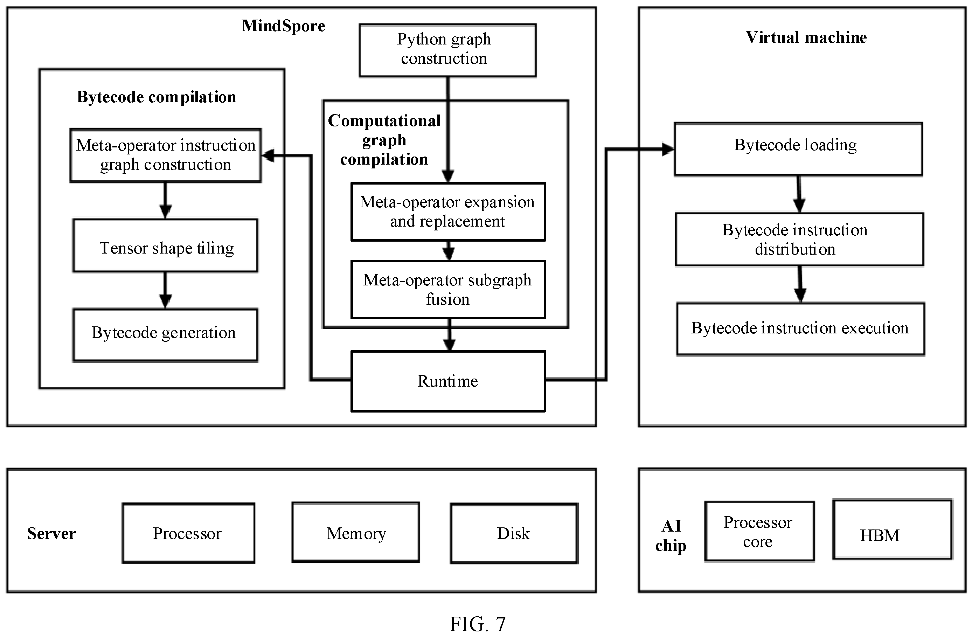

For example, refer to FIG. 7. FIG. 7 is a diagram of a system architecture in an actual application scenario according to an embodiment of this application. As shown in FIG. 7, in this embodiment, an open-source MindSpore AI computing framework is used to implement automatic operator fusion and execution of a dynamic computational graph, to accelerate running performance in a dynamic computational graph scenario. Because operator fusion needs to dynamically generate different kernel functions, and a specific shape of a tensor can be known only when a dynamic computational graph is running, this embodiment may be used to generate and execute a kernel function of a fused operator. In a special scenario, this embodiment may also resolve an automatic operator compilation problem of a dynamic computational graph.

In the system architecture shown in FIG. 7, the MindSpore AI computing framework runs on a server, and hardware on the server includes a processor, a memory, a disk, and the like. A virtual machine runs on an AI chip (for example, a GPU). The AI chip has a dedicated AI processor core and a high bandwidth memory (High Bandwidth Memory, HBM).

The MindSpore AI computing framework mainly includes three modules: Python graph construction, computational graph compilation, and bytecode compilation. The virtual machine mainly includes three modules: bytecode loading, bytecode instruction distribution, and bytecode instruction execution. The following describes a process of implementing running of an AI model by the MindSpore AI computing framework and the virtual machine through cooperation.

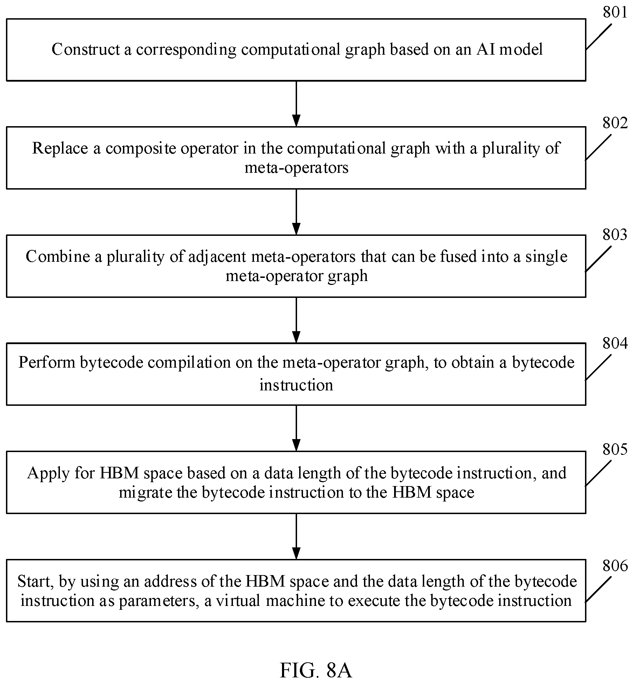

FIG. 8A is a diagram of an execution procedure of an AI computing framework according to an embodiment of this application. As shown in FIG. 8A, the execution procedure of the AI computing framework includes the following steps 801 to 806.

Step 801: Construct a corresponding computational graph based on an AI model.

In this embodiment, Step 801 is performed by a Python graph construction module in a MindSpore AI computing framework, and is mainly used to construct the corresponding computational graph based on an AI model described by a MindSpore Python interface. In other words, in a process of running the AI model, the MindSpore Python interface may be invoked to run the AI model, to trigger execution of a series of steps mentioned in this embodiment.

Step 802: Replace a composite operator in the computational graph with a plurality of meta-operators.

In this embodiment, Step 802 and Step 803 are performed by a computational graph compilation module in the MindSpore AI computing framework. After the computational graph is obtained, because an operator node in the computational graph usually indicates a composite operator (for example, an operator like a convolution operator or a pooling operator), the composite operator in the computational graph may be replaced with the plurality of meta-operators, to subsequently generate a bytecode instruction at a granularity of a meta-operator.

Step 803: Combine a plurality of adjacent meta-operators that can be fused into a single meta-operator graph.

After the composite operator in the computational graph is replaced with the plurality of meta-operators, the entire computational graph actually includes a large quantity of meta-operators. To facilitate subsequent generation of a bytecode instruction, the plurality of adjacent meta-operators that can be fused in the computational graph may be combined into the single meta-operator graph. In this way, the computational graph may be split into a plurality of meta-operator graphs by dividing the plurality of meta-operators that can be fused in the computational graph, and each meta-operator graph includes a plurality of meta-operators. The meta-operator included in each meta-operator graph may be determined based on an actual hardware environment in which a virtual machine that interprets and executes a bytecode instruction runs.

Specifically, if some meta-operators with large output tensor shape differences are fused into a same meta-operator graph, it may be difficult to implement tensor tiling, and consequently, and a local memory is insufficient when a processor core processes the bytecode instruction. Therefore, a difference between shapes of output tensors corresponding to the meta-operators needs to be considered when the meta-operators are fused. In addition, because the local memory of the processor core is limited, if excessive meta-operators are fused into one meta-operator graph, a phenomenon of insufficient local memory is easily caused. Therefore, a size of the local memory of the processor core needs to be considered when the meta-operators are fused, to avoid fusion of excessive meta-operators. When a local memory constraint is met, more meta-operators may be fused in a same meta-operator graph as much as possible, so that intermediate data obtained by processing a plurality of meta-operators in a same meta-operator graph can be stored in a local memory that is of a device and that has a higher read/write speed, and data does not need to be frequently read from/written into a global memory that is of the device and that has a lower read/write speed, thereby increasing operator processing efficiency.

Step 804: Perform bytecode compilation on the meta-operator graph, to obtain a bytecode instruction.

After the meta-operator graph is obtained, the meta-operator graph may be converted into a meta-operator instruction graph based on an actual input tensor, and a corresponding bytecode instruction is generated by performing tensor shape tiling on the meta-operator instruction graph. Specifically, for a process of generating the bytecode instruction based on the meta-operator graph, refer to the descriptions in the foregoing embodiment. Details are not described herein again.

Step 805: Apply for HBM space based on a data length of the bytecode instruction, and migrate the bytecode instruction to the HBM space.

After the bytecode instruction is generated, corresponding HBM space may be applied for from an AI chip based on a data length of the generated bytecode instruction, to migrate the generated bytecode instruction to the AI chip for interpretation and execution. After the HBM space is obtained through applying, the bytecode instruction may be migrated to the HBM space.

Step 806: Start, by using an address of the HBM space and the data length of the bytecode instruction as parameters, the virtual machine to execute the bytecode instruction.

After the bytecode instruction is migrated, the address of the HBM space and the data length of the bytecode instruction may be used as input parameters, and the virtual machine on the AI chip is started through a runtime drive interface of the AI chip to execute the bytecode instruction. When the virtual machine is started to execute the bytecode instruction, a quantity of processor cores that are on the AI chip and that process the bytecode instruction in parallel may be configured to be the same as a quantity of tensor shape tiles in the bytecode instruction, to fully use a parallel processing capability of a plurality of processor cores on the AI chip.

In addition, after executing the bytecode instruction, the virtual machine may release HBM space corresponding to the bytecode instruction.

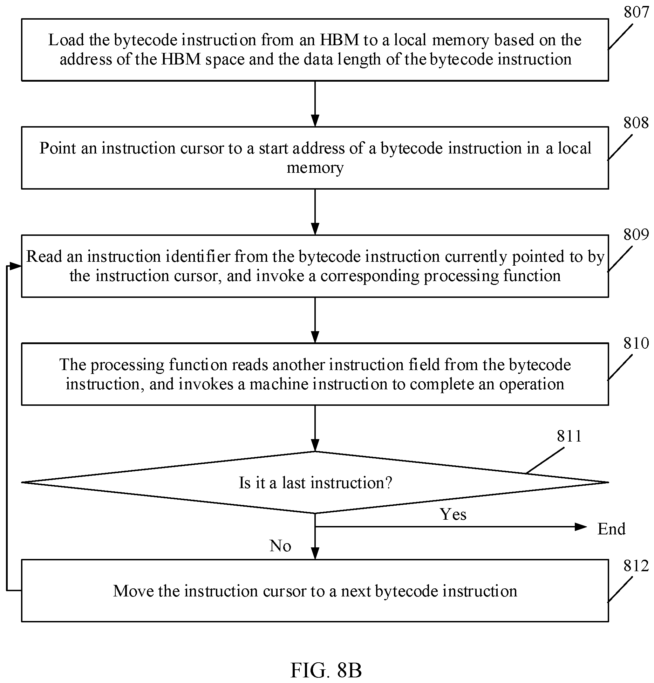

FIG. 8B is a schematic flowchart of interpreting and executing a bytecode instruction by a virtual machine according to an embodiment of this application. As shown in FIG. 8B, a procedure in which the virtual machine interprets and executes the bytecode instruction includes the following steps 807 to 812.

Step 807: Load the bytecode instruction from the HBM to the local memory based on the address of the HBM space and the data length of the bytecode instruction.

In a process of executing the bytecode instruction by the virtual machine, because hardware that actually processes the bytecode instruction is the plurality of processor cores in the AI chip, the bytecode instruction may be loaded from the HBM to the local memory of the processor core based on the address of the HBM space and the data length of the bytecode instruction, so that each processor core processes a corresponding bytecode instruction.

Step 808: Point an instruction cursor to a first address of a bytecode instruction in the local memory.

In a process of processing the bytecode instruction by the processor core, the bytecode instructions may be executed one by one based on the instruction cursor. To be specific, when the bytecode instruction is interpreted and executed at the beginning, the instruction cursor is first pointed to the first address of the bytecode instruction in the local memory, to implement interpretation and execution of a 1^{st} bytecode instruction.

Step 809: Read an instruction identifier from the bytecode instruction currently pointed to by the instruction cursor, and invoke a corresponding processing function.

Each bytecode instruction includes a unique instruction identifier, and the instruction identifier is determined based on a type of a meta-operator corresponding to the bytecode instruction. Therefore, a corresponding processing function may be invoked based on the instruction identifier to process the bytecode instruction.

Step 810: The processing function reads another instruction field from the bytecode instruction, and invokes a machine instruction to complete an operation.

For a process of processing the bytecode instruction by the processing function, refer to the foregoing embodiments. Details are not described herein again.

Step 811: Determine whether a previous bytecode instruction that has been processed is a last instruction.

After a bytecode instruction is processed, it may be determined whether a previous bytecode instruction that has been processed is the last instruction. If the previous bytecode instruction that has been processed is the last instruction, the bytecode instruction processing procedure ends.

Step 812: Move the instruction cursor to a next bytecode instruction.

If the previous bytecode instruction that has been processed is not the last instruction, the instruction cursor points to a next bytecode instruction, and the next bytecode instruction continues to be processed.

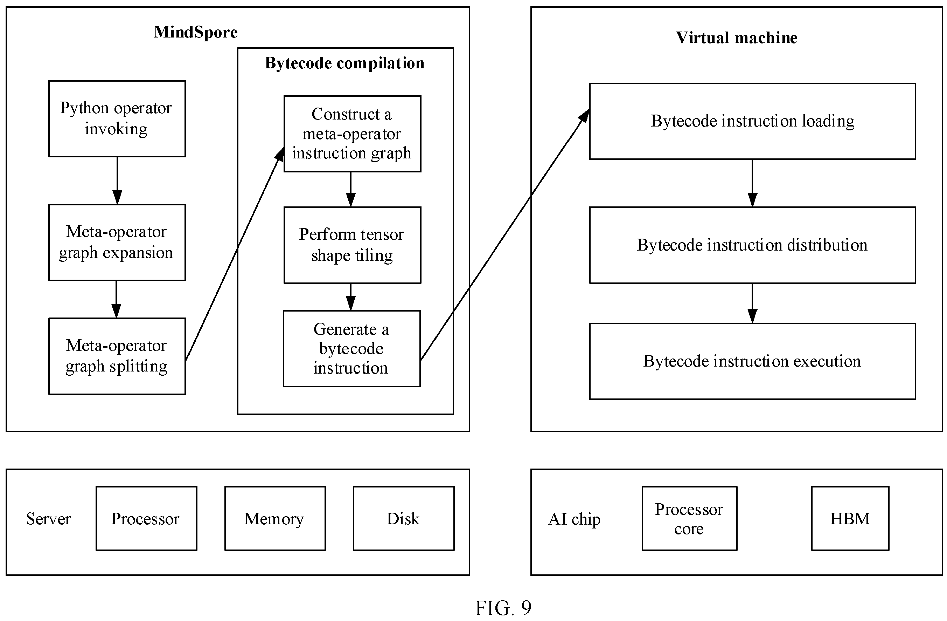

For example, refer to FIG. 9. FIG. 9 is a diagram of a system architecture in another actual application scenario according to an embodiment of this application. The system architecture shown in FIG. 9 is the same as the system architecture shown in FIG. 7 in terms of hardware. A difference lies in that, in the system architecture shown in FIG. 7, a computational graph is generated based on an AI model and subsequent processing is performed on the computational graph. In the system architecture shown in FIG. 9, in a process of running an AI model, construction of a meta-operator graph corresponding to an operator is triggered through an operator invoking interface, and subsequent processing is performed on the meta-operator graph.

Specifically, code of the AI model is executed using a Python dynamic language. The operator interface is dynamically invoked at runtime to deliver and execute an operator. Operators are dynamically delivered when the code of the AI model is executed. In addition, even if a same operator is invoked, shapes of input tensors may be different each time the operator is invoked. Therefore, for the conventional automatic operator compilation technology, it is unacceptable to perform full-procedure operator compilation of a binary file each time. However, because bytecode compilation is used in this solution, in this scenario, a same processing function may be actually executed by a virtual machine, and only a bytecode instruction needs to be regenerated during running each time.

A MindSpore AI computing framework mainly includes four modules: Python operator invoking, meta-operator graph expansion, meta-operator graph splitting, and bytecode compilation. The virtual machine mainly includes three modules: bytecode loading, bytecode instruction distribution, and bytecode instruction execution. Steps performed on the virtual machine are the same as those in the embodiment corresponding to FIG. 7. For details, refer to the foregoing embodiment. The following describes a process in which the MindSpore AI computing framework generates a bytecode instruction based on a delivered operator.
(1) Python operator invoking: The code of the AI model is implemented using the Python language. For tensor computing during running of the AI model, a Python interface corresponding to MindSpore is invoked to trigger operator invoking.
(2) Meta-operator graph expansion: If the Python operator invoking delivers a composite operator, the delivered composite operator can be expanded into a corresponding meta-operator subgraph, so that the meta-operator subgraph can be directly identified and processed in a bytecode compilation phase.
(3) Meta-operator graph splitting: For some composite operators, an expanded meta-operator sub-graph is complex and cannot be executed completely by invoking a kernel function of the virtual machine once. In this case, a meta-operator graph corresponding to the composite operator may be split into a plurality of meta-operator graphs.
(4) Bytecode compilation: Bytecode compilation and virtual machine kernel function start execution are separately performed on one or more obtained meta-operator graphs based on a corresponding input tensor.

The foregoing describes in detail the method provided in embodiments of this application. The following describes a device that is provided in embodiments of this application and that is configured to perform the foregoing methods.

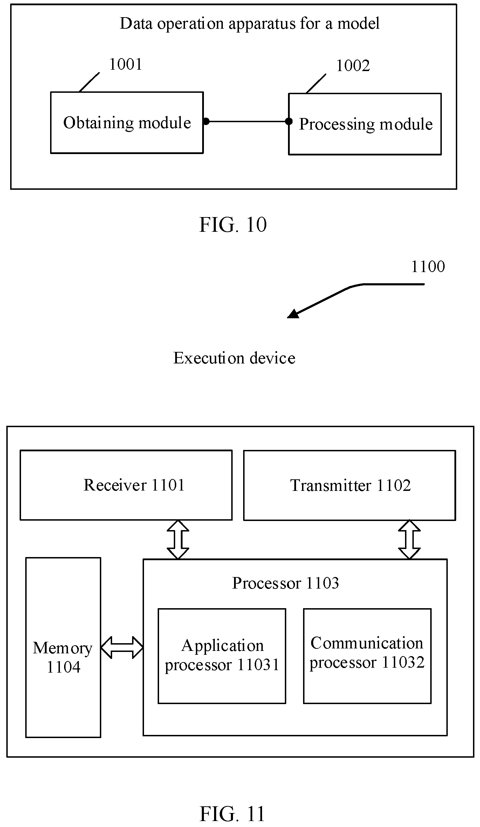

FIG. 10 is a diagram of a structure of a data operation apparatus for a model according to an embodiment of this application. As shown in FIG. 10, the data operation apparatus for a model includes: an obtaining module 1001, configured to obtain a computational graph and a shape of an input tensor, where the computational graph indicates an operational operation in an artificial intelligence AI model, and the input tensor represents input data corresponding to the operational operation; and a processing module 1002, configured to generate at least one bytecode instruction based on the computational graph and the shape of the input tensor, where the at least one bytecode instruction indicates an operational operation performed on the input tensor; and the processing module 1002 is further configured to execute the at least one bytecode instruction via a virtual machine, where a processing function corresponding to the at least one bytecode instruction is configured in the virtual machine, and the processing function is used to interpret the at least one bytecode instruction and invoke a machine instruction based on an interpretation result to perform the operational operation on the input tensor.

In a possible implementation, the at least one bytecode instruction further indicates to tile the input tensor into a plurality of portions to separately perform an operational operation; and the processing module 1002 is specifically configured to process the at least one bytecode instruction in parallel by using a plurality of virtual machine instances located in different processor cores, where different virtual machine instances in the plurality of virtual machine instances are used to process different data in the input tensor.

In a possible implementation, the at least one bytecode instruction includes a tile quantity, and the tile quantity indicates a quantity of tiles of the input tensor.

In a possible implementation, the tile quantity is greater than or equal to a quantity of the plurality of virtual machine instances.

In a possible implementation, the processing module 1002 is further configured to: generate a first bytecode instruction and a second bytecode instruction based on the computational graph and the input tensor, where the first bytecode instruction indicates to migrate the input tensor from a global memory to a local memory, and the second bytecode instruction indicates to migrate, from the local memory to the global memory, an output tensor obtained by processing the input tensor; and sequentially execute the first bytecode instruction, the at least one bytecode instruction, and the second bytecode instruction via the virtual machine.

In a possible implementation, after generating the at least one bytecode instruction, the processing module 1002 is further configured to migrate the at least one bytecode instruction to memory space accessed by AI hardware, where the AI hardware is configured to run the virtual machine.

In a possible implementation, the processing module 1002 is specifically configured to: obtain a first meta-operator graph through conversion based on the computational graph, where the first meta-operator graph includes a plurality of meta-operators, and the plurality of meta-operators all indicate a basic operational operation; and generate the at least one bytecode instruction based on the shape of the input tensor and the meta-operator graph, where the plurality of meta-operators correspond to the at least one bytecode instruction.

In a possible implementation, the processing module 1002 is further configured to: convert each operator in the computational graph into one or more meta-operators, to obtain a converted computational graph; and divide the converted computational graph into a plurality of consecutive meta-operator graphs, where the plurality of meta-operator graphs include the first meta-operator graph, and each of the plurality of meta-operator graphs includes a plurality of meta-operators.

In a possible implementation, the obtaining module 1001 is further configured to obtain an operator invoking instruction, where the operator invoking instruction indicates to perform an operational operation corresponding to a target operator, and the operator invoking instruction includes the input tensor; and the processing module 1002 is further configured to generate the computational graph based on the target operator indicated in the operator invoking instruction, where the computational graph includes a plurality of meta-operators representing the target operator, and the plurality of meta-operators all indicate a basic operational operation.

In a possible implementation, the at least one bytecode instruction includes an instruction identifier, and the virtual machine is configured to invoke, based on the instruction identifier, the processing function corresponding to the at least one bytecode instruction to process the at least one bytecode instruction.

In a possible implementation, the at least one bytecode instruction includes a data type identifier, and the data type identifier indicates a data type of the input tensor.

In a possible implementation, the at least one bytecode instruction further indicates a storage address of the input tensor and a storage address of the output tensor, and the output tensor is a tensor obtained by performing the operational operation on the input tensor. In addition, both the storage address of the input tensor and the storage address of the output tensor are addresses in the local memory.

FIG. 11 is a diagram of a structure of an execution device according to an embodiment of this application. The execution device 1100 may be specifically represented as a server, a personal computer, a smartphone, or the like. This is not limited herein. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module or a data structure, a subset thereof, or an extended set thereof. The operation instructions may include various operation instructions for implementing various operations.

The processor 1103 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1103, or implemented by the processor 1103. The processor 1103 may be an integrated circuit chip and has a signal processing capability. In an implementation process, the steps in the foregoing methods may be implemented by using a hardware integrated logical circuit in the processor 1103, or by using instructions in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component.

The processor 1103 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device like a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the model structure determining method described in the foregoing embodiments, or a chip in a training device performs the model structure determining method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

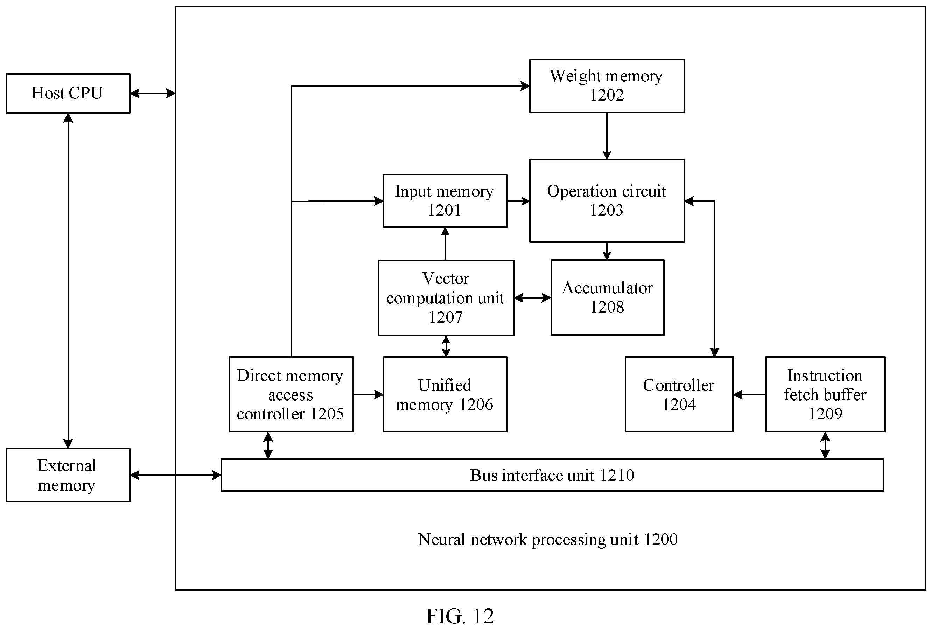

Specifically, refer to FIG. 12. FIG. 12 is a diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of processing engines (Process Engines, PEs) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. Weight data is directly transferred to the weight memory 1202 through a direct memory access controller (Direct Memory Access Controller, DMAC) DMAC 1205. The input data is also transferred to the unified memory 1206 through the DMAC.

A BIU is a bus interface unit, namely, a bus interface unit 1210, and is configured to perform interaction between an AXI bus, and the DMAC and an instruction fetch buffer (Instruction Fetch Buffer, IFB) 1209.

The bus interface unit (Bus Interface Unit, BIU) 1210 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector computation unit 1207 includes a plurality of operation processing units. If required, further processing is performed on output of the operation circuit 1203, for example, vector multiplication, vector addition, an exponential operation, a logarithmic operation, or size comparison. The vector computation unit 1207 is mainly configured to perform network computation at a non-convolutional/fully connected layer in a neural network, for example, batch normalization (Batch Normalization), pixel-level summation, and up-sampling on a feature map.

In some implementations, the vector computation unit 1207 can store a processed output vector in the unified memory 1206. For example, the vector computation unit 1207 may apply a linear function or a nonlinear function to the output of the operation circuit 1203, for example, perform linear interpolation on a feature map extracted at a convolutional layer. For another example, the linear function or the nonlinear function is applied to a vector of an accumulated value to generate an activation value. In some implementations, the vector computation unit 1207 generates a normalized value, a pixel-level summation value, or both. In some implementations, the processed output vector can be used as activated input to the operation circuit 1203, for example, the processed output vector can be used at a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private for a hardware architecture of the NPU.

Any one of the processors mentioned above may be a general-purpose central processing unit, a microprocessor, an ASIC, or one or more integrated circuits for controlling program execution.

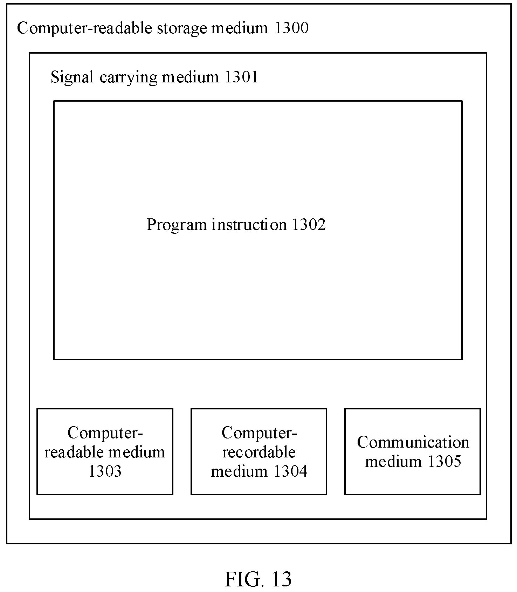

FIG. 13 is a diagram of a structure of a computer-readable storage medium according to an embodiment of this application. This application further provides a computer-readable storage medium. In some embodiments, the method disclosed in FIG. 3 may be implemented as computer program instructions encoded in a machine-readable format on the computer-readable storage medium or encoded in another non-transitory medium or product.

FIG. 13 schematically shows a conceptual partial view of an example computer-readable storage medium arranged according to at least some embodiments shown herein, and the example computer-readable storage medium includes a computer program for executing a computer process on a computing device.

In an embodiment, the computer-readable storage medium 1300 is provided by using a signal carrying medium 1301. The signal carrying medium 1301 may include one or more program instructions 1302. When the one or more program instructions 1302 are run by one or more processors, the foregoing functions or a part of the foregoing functions described for FIG. 3 may be provided.

In some examples, the signal carrying medium 1301 may include a computer-readable medium 1303, for example, but not limited to, a hard disk drive, a compact disc (CD), a digital video disc (DVD), a digital tape, a memory, a ROM, or a RAM.

In some implementations, the signal carrying medium 1301 may include a computer-recordable medium 1304, for example, but not limited to, a memory, a read/write (R/W) CD, or an R/W DVD. In some implementations, the signal carrying medium 1301 may include a communication medium 1305, for example, but not limited to, a digital and/or analog communication medium (for example, an optical fiber cable, a waveguide, a wired communication link, or a wireless communication link). Therefore, for example, the signal carrying medium 1301 may be conveyed by the communication medium 1305 in a wireless form (for example, a wireless communication medium that complies with the IEEE 802.11 standard or another transmission protocol).

The one or more program instructions 1302 may be, for example, computer-executable instructions or logic implementation instructions. In some examples, the computing device may be configured to provide various operations, functions, or actions in response to the program instruction 1302 conveyed to the computing device by using one or more of the computer-readable medium 1303, the computer-recordable medium 1304, and/or the communication medium 1305.

In addition, it should be noted that the apparatus embodiments described above are merely examples. The units described as separate parts may or may not be physically separate, and parts displayed as units may or may not be physical units, to be specific, may be located at one place, or may be distributed on a plurality of network units. A part or all of the modules may be selected based on actual requirements to achieve the objectives of the solutions in embodiments. In addition, in the accompanying drawings of the apparatus embodiments provided by this application, connection relationships between modules represent that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or a part of the foregoing embodiments may be implemented by using software, hardware, firmware, or any combination thereof. When software is used to implement embodiments, all or a part of embodiments may be implemented in a form of computer program product.

The computer program product includes one or more computer instructions. When the computer program instructions are loaded and executed by a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

## Claims

1. A data operation method, comprising:
obtaining a computational graph and a shape of an input tensor, wherein the computational graph indicates an operational operation in an artificial intelligence AI model, and the input tensor represents input data corresponding to the operational operation;
generating at least one bytecode instruction based on the computational graph and the shape of the input tensor, wherein the at least one bytecode instruction indicates an operational operation performed on the input tensor; and
executing, by a virtual machine, the at least one bytecode instruction to obtain an output tensor, wherein a processing function corresponding to the at least one bytecode instruction is configured in the virtual machine, and the processing function is used to invoke a machine instruction corresponding to the at least one bytecode instruction to perform the operational operation on the input tensor.

2. The method according to claim 1, wherein the at least one bytecode instruction further indicates to tile the input tensor into a plurality of portions to separately perform an operational operation; and
executing, by the virtual machine, the at least one bytecode instruction comprises:
processing, by using a plurality of virtual machine instances located in different processor cores, the at least one bytecode instruction in parallel, wherein different virtual machine instances in the plurality of virtual machine instances are used to process different data in the input tensor.

3. The method according to claim 2, wherein the at least one bytecode instruction comprises a tile quantity, and the tile quantity indicates a quantity of tiles of the input tensor.

4. The method according to claim 3, wherein the tile quantity is greater than or equal to a quantity of the plurality of virtual machine instances.

5. The method according to any one of claims 1 to 4, wherein the method further comprises:
generating a first bytecode instruction and a second bytecode instruction based on the computational graph and the input tensor, wherein the first bytecode instruction indicates to migrate the input tensor from a global memory to a local memory, and the second bytecode instruction indicates to migrate, from the local memory to the global memory, an output tensor obtained by processing the input tensor; and
executing, by the virtual machine, the at least one bytecode instruction comprises:
sequentially executing, by the virtual machine, the first bytecode instruction, the at least one bytecode instruction, and the second bytecode instruction.

6. The method according to any one of claims 1 to 5, wherein after generating the at least one bytecode instruction, the method further comprises:
migrating the at least one bytecode instruction to memory space accessed by AI hardware, wherein the AI hardware is configured to run the virtual machine.

7. The method according to any one of claims 1 to 6, wherein generating the at least one bytecode instruction based on the computational graph and the shape of the input tensor comprises:
obtaining a first meta-operator graph through conversion based on the computational graph, wherein the first meta-operator graph comprises a plurality of meta-operators, the computational graph indicates a part or all of operational operations in the AI model, and the plurality of meta-operators all indicate a basic operational operation; and
generating the at least one bytecode instruction based on the shape of the input tensor and the first meta-operator graph, wherein the plurality of meta-operators correspond to the at least one bytecode instruction.

8. The method according to claim 7, wherein obtaining the first meta-operator graph through conversion based on the computational graph comprises:
converting each operator in the computational graph into one or more meta-operators, to obtain a converted computational graph; and
dividing the converted computational graph into a plurality of consecutive meta-operator graphs, wherein the plurality of meta-operator graphs comprise the first meta-operator graph, and each of the plurality of meta-operator graphs comprises a plurality of meta-operators.

9. The method according to any one of claims 1 to 6, wherein obtaining the computational graph comprises:
obtaining an operator invoking instruction, wherein the operator invoking instruction indicates to perform an operational operation corresponding to a target operator, and the operator invoking instruction comprises the input tensor; and
generating the computational graph based on the target operator indicated in the operator invoking instruction, wherein the computational graph comprises a plurality of meta-operators representing the target operator, and the plurality of meta-operators all indicate a basic operational operation.

10. The method according to any one of claims 1 to 9, wherein the at least one bytecode instruction comprises an instruction identifier, and the virtual machine is configured to invoke, based on the instruction identifier, the processing function corresponding to the at least one bytecode instruction to process the at least one bytecode instruction.

11. The method according to any one of claims 1 to 10, wherein the at least one bytecode instruction comprises a data type identifier, and the data type identifier indicates a data type of the input tensor.

12. The method according to claim 5, wherein the at least one bytecode instruction further indicates a storage address of the input tensor and a storage address of the output tensor, and both the storage address of the input tensor and the storage address of the output tensor are addresses in the local memory.

13. A data operation apparatus for a model, comprising:
an obtaining module, configured to obtain a computational graph and a shape of an input tensor, wherein the computational graph indicates an operational operation in an artificial intelligence AI model, and the input tensor represents input data corresponding to the operational operation; and
a processing module, configured to generate at least one bytecode instruction based on the computational graph and the shape of the input tensor, wherein the at least one bytecode instruction indicates an operational operation performed on the input tensor; and
the processing module is further configured to execute the at least one bytecode instruction via a virtual machine to obtain an output tensor, wherein a processing function corresponding to the at least one bytecode instruction is configured in the virtual machine, and the processing function is used to invoke a machine instruction corresponding to the at least one bytecode instruction to perform the operational operation on the input tensor.

14. The apparatus according to claim 13, wherein the at least one bytecode instruction further indicates to tile the input tensor into a plurality of portions to separately perform an operational operation; and
the processing module is specifically configured to process the at least one bytecode instruction in parallel by using a plurality of virtual machine instances located in different processor cores, wherein different virtual machine instances in the plurality of virtual machine instances are used to process different data in the input tensor.

15. The apparatus according to claim 14, wherein the at least one bytecode instruction comprises a tile quantity, and the tile quantity indicates a quantity of tiles of the input tensor.

16. The apparatus according to claim 15, wherein the tile quantity is greater than or equal to a quantity of the plurality of processor cores.

17. The apparatus according to any one of claims 14 to 16, wherein the processing module is further configured to:
generate a first bytecode instruction and a second bytecode instruction based on the computational graph and the input tensor, wherein the first bytecode instruction indicates to migrate the input tensor from a global memory to a local memory, and the second bytecode instruction indicates to migrate, from the local memory to the global memory, an output tensor obtained by processing the input tensor; and
sequentially execute the first bytecode instruction, the at least one bytecode instruction, and the second bytecode instruction via the virtual machine.

18. The apparatus according to any one of claims 13 to 17, wherein after generating the at least one bytecode instruction, the processing module is further configured to:
migrate the at least one bytecode instruction to memory space accessed by AI hardware, wherein the AI hardware is configured to run the virtual machine.

19. The apparatus according to any one of claims 13 to 18, wherein the processing module is specifically configured to:
obtain a first meta-operator graph through conversion based on the computational graph, wherein the first meta-operator graph comprises a plurality of meta-operators, the computational graph indicates a part or all of operational operations in the AI model, and the plurality of meta-operators all indicate a basic operational operation; and
generate the at least one bytecode instruction based on the shape of the input tensor and the first meta-operator graph, wherein the plurality of meta-operators correspond to the at least one bytecode instruction.

20. The apparatus according to claim 19, wherein the processing module is further configured to:
convert each operator in the computational graph into one or more meta-operators, to obtain a converted computational graph; and
divide the converted computational graph into a plurality of consecutive meta-operator graphs, wherein the plurality of meta-operator graphs comprise the first meta-operator graph, and each of the plurality of meta-operator graphs comprises a plurality of meta-operators.

21. The apparatus according to any one of claims 13 to 18, wherein
the obtaining module is further configured to obtain an operator invoking instruction, wherein the operator invoking instruction indicates to perform an operational operation corresponding to a target operator, and the operator invoking instruction comprises the input tensor; and
the processing module is further configured to generate the computational graph based on the target operator indicated in the operator invoking instruction, wherein the computational graph comprises a plurality of meta-operators representing the target operator, and the plurality of meta-operators all indicate a basic operational operation.

22. The apparatus according to any one of claims 13 to 21, wherein the at least one bytecode instruction comprises an instruction identifier, and the virtual machine is configured to invoke, based on the instruction identifier, the processing function corresponding to the at least one bytecode instruction to process the at least one bytecode instruction.

23. The apparatus according to any one of claims 13 to 22, wherein the at least one bytecode instruction comprises a data type identifier, and the data type identifier indicates a data type of the input tensor.

24. The apparatus according to claim 17, wherein the at least one bytecode instruction further indicates a storage address of the input tensor and a storage address of the output tensor, and both the storage address of the input tensor and the storage address of the output tensor are addresses in the local memory.

25. A data operation apparatus for a model, comprising a memory and a processor, wherein the memory stores code, the processor is configured to execute the code, and when the code is executed, the apparatus performs the method according to any one of claims 1 to 12.

26. A computer storage medium, wherein the computer storage medium stores instructions, and when the instructions are executed by a computer, the computer is enabled to perform the method according to any one of claims 1 to 12.

27. A computer program product, wherein the computer program product stores instructions, and when the instructions are executed by a computer, the computer is enabled to perform the method according to any one of claims 1 to 12.
